# EUROPEAN PATENT SPECIFICATION

(11) **EP 1 584 120 B1**
(45) Date of publication and mention of the grant of the patent: **11.04.2012**
(21) Application number: 03811914.5
(22) Date of filing: 21.11.2003
(51) Int. Cl.: B01B 1/00, B01J 19/00, C01B 3/38, C01B 3/58, H01M 8/02, H01M 8/06, H01M 8/04

(54) **POWER SUPPLY SYSTEM AND ABNORMAL DETECTION METHOD FOR THE POWER SUPPLY SYSTEM**
STROMVERSORGUNGSSYSTEM UND ABNORMITÄTSDETEKTIONSVERFAHREN FÜRDAS STROMVERSORGUNGSSYSTEM
SYSTEME D'ALIMENTATION ET PROCEDE DE DETECTION D'ANOMALIES DESTINE AUDIT SYSTEME

(30) Priority: 26.11.2002 JP 2002342412
(43) Date of publication of application: 12.10.2005
(73) Proprietor: CASIO COMPUTER CO., LTD., Tokyo 151-0071 (JP)
(72) Inventor: BITOH, Hiroyasu, Oume-shi, Tokyo 198-0024 (JP)
(74) Representative: Grünecker, Kinkeldey, Stockmair & Schwanhäusser
(86) International application number: PCT/JP2003/014875
(87) International publication number: WO 2004/049482

(56) References cited:
- EP-A- 0 978 476
- WO-A-01/16022
- US-A1- 2002 031 458
- US-A1- 2002 045 077
- US-B1- 6 374 166

## Description

This invention relates to a power supply system and an abnormal detection method for the power supply system, and more particularly comprises a power supply system equipped with a power generation section which generates predetermined electric power and comprises chemical reactors to which fuel for power generation is supplied. Furthermore, when abnormalities of damage or failure and the like in the chemical reactors of the power supply system have occurred, the present invention relates to an abnormal detection method which detects occurrences of those abnormalities.

In recent years, there has been steadily increasing public interest in environmental problems and energy issues. As the power supply system which becomes more commonly used in the next generation, Research and Development (R&D) has trended toward the spread in utilization of around 30 to 40 percent of relatively high-octane fuel cells with generating efficiency (energy conversion efficiency) and have very little influence (environmental impact) on the environment.

As the field to which a power supply system using such a fuel cell is applied, for example, in the automobile field, research and development for applying the power supply system with a fuel cell for the power supply unit of such electric automobiles are explored vigorously, as well as being put into practical use and produced commercially. An electric automobile using an efficient electric motor as the drive unit is needed to replace the big gasoline engines and large diesel power plants, which have a significant negative environmental impact because of discharging poisonous exhaust gases and the like.

Additionally, conventional miniaturization of a power supply system using such a fuel cell to meet the demands of the times for high performance handcarry type electronic devices such as a Personal Digital Assistant (PDA) or a cellular/mobile phone driven by a secondary battery, a digital still camera, a digital video camcorder, a handheld television or a notebook personal computer and the like coupled with the need for a durable and affordable power supply to extend the operating time, R&D for making it possible to apply as a power supply unit which replace a secondary battery in these portable devices has also been advanced rapidly in recent years.

Now, set to a power supply system using a fuel cell, is a configuration which comprises, for example, a chemical reactor which comprises a vaporizing section, a reforming section and a byproduct removing section; the fuel for power generation such as methanol and the like is vaporized by the vaporizing section; the fuel for power generation to hydrogen gas and the like is reformed with the reforming section, the carbon monoxide within the hydrogen gas refined is eradicated with the byproduct removing section; and next the hydrogen gas is generated and supplied to the fuel cell. As for these chemical reactors, in each chemical reactor in order for the desired chemical reaction to advance, for example, the reforming section is set to a configuration of around 300 degrees Centigrade (300°C) (around 572 degrees Fahrenheit (572°F.)) so that it may become a comparatively elevated temperature.

For that reason, for example, the configuration comprises heaters for heating each chemical reactor so that it may heat to a predetermined temperature. Also, the configuration comprises a thermal insulation structure insulated from the periphery in order to prevent heat dissipation to the periphery and to reduce the loss of heat. This thermal insulation structure, for example, a vacuum insulation structure may be used which is formed in the above-mentioned reforming section and the like within a vacuum container of which the interior is vacuumed (isolated from external influences).

In this manner, for example, if the vacuum insulation structure is comprised as the thermal insulation structure in a reforming section and the like, when abnormal circumstances of the vacuum insulation structure having been damaged and the vacuum broken by some impact and the like occurred, heat spreads to the apparatus or device equipped with the power supply system and it will overheat, catch fire or pose a potential hazard to the user of the apparatus or device. In that case to prevent occurrences of overheating or fires in such an apparatus or device , it is necessary to detect all occurrences of abnormalities due to damage and the like of the thermal insulation structure in the chemical reactor to be able to administer suitable management.

A failure detection in a vehicle mounted fuel cell power supply system is described in US 6,374,166. In an exhaust combustor for combusting exhaust hydrogen and exhaust air which are output by a fuel cell of the power supply system the operation temperature is measured. This temperature is compared to an estimated combustion temperature which is calculated relative to the amount of hydrogen introduced into the fuel cell, the ambient temperature of the vehicle, and the electrical power generated by the fuel cell. If the difference between these two temperatures exceeds a certain predetermined value, occurrences of abnormalities in either the exhaust combustor, the fuel cell, or the temperature sensor are concluded.

A control of the temperature in a reformer section of a fuel cell system for generating electrical power is discussed in US 2002/0045077 A1. For keeping the temperature of the reformer close to an optimal operation temperature, based on the difference between the measured temperature of the reformer and the optimal temperature, the amount of supplied air or the concentration of hydrocarbon in the reformer is adjusted.

Prior art reference EP 0 978 476 describes controlling the amount of air supplied to a reformer based on the supplied amount of fuel and on the equations describing the thermal behavior of the chemical reactions in the reformer such that an optimal reaction temperature within the reformer is achieved.

WO 01/16022 A1 suggests detecting the temperature in a reformer of a fuel cell power supply for determining the amount of air supply. In order to detect the temperature in a fast manner without being influenced by the thermal properties of a temperature sensor, a "photo detector"/"optical pyrometer" monitors the light intensity of a catalyst in the reformer. The light intensity corresponds to the temperature at the surface of the reformer.

According to US 2002/0031458 A1 an achievement of an uniform temperature distribution within a reformer can be achieved. For avoiding local temperature variations within the reformer, the reformer is divided into several units and the air supply to each of the units is controlled separately based on the individual temperatures in these units.

The present invention has been made in view of the circumstances mentioned above. Accordingly, a power supply system which is comprised with a chemical reaction section heated by predetermined temperature and produces electric power has advantages in that occurrence of abnormalities can be detected simply when an abnormality of the power supply system by damage and the like have occurred, without merely using the sensor for exclusive use for abnormal detection; the system can be minimized; and overall cost can be reduced.

This is achieved by the features of the independent claims.
FIG. **1** is an outline block diagram showing an example of the internal configuration of an electronic device by which the power supply system related to this invention is applied.
FIG. **2** is a block diagram showing the first embodiment of the power supply system concerning the present invention.
FIG. **3** is a transmission plan showing an example, of the configuration applicable to the reforming section of the chemical reaction section in the embodiment.
FIG. **4** is a sectional drawing in the **B-B** surface of the reforming section in FIG. **3**.
FIG. **5** is the same sectional drawing as FIG. **4** in another example of the configuration applicable to the reforming section of the chemical reaction section in the embodiment.
FIG. **6** is an outline block diagram showing an example of one configuration of the fuel cell applicable to the power generation section related to the embodiment.
FIG. **7** is a flowchart which shows the operation of the abnormal detection process at startup time of the power supply system.
FIG. **8** is a flowchart which shows operation of the abnormal detection process at operation time of the power supply system.
FIG. **9** is a block diagram showing the second embodiment of the power supply system related to the invention.

The present invention is to provide a power supply system and an abnormal detection method for the power supply system which will hereinafter be described in detail with reference to the preferred embodiments shown in the accompanying drawings.

### <<The equipment applied to the power supply system>>

Initially, an example equipment configuration is applied to the power supply system concerning this invention will be explained.

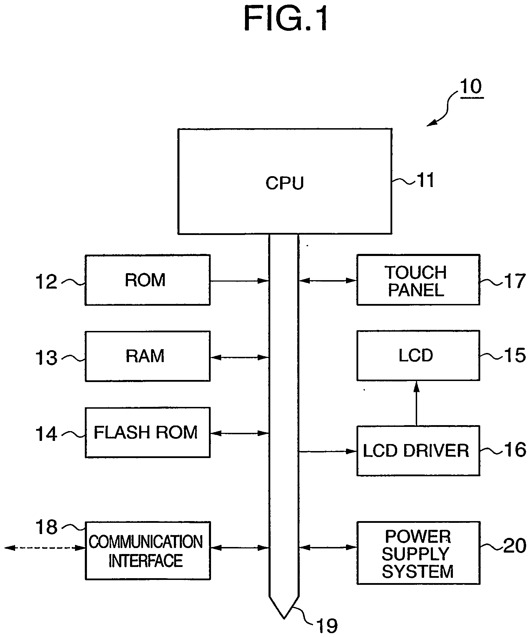

FIG. **1** is an outline block diagram showing an example of the internal configuration of an electronic device by which the power supply system related to this invention is applied.

The invention relates to a power supply system is applied as a portable electronic device, such as a Personal Digital Assistant, a cellular/mobile phone, a digital still camera, a digital video camcorder, a handheld television, a notebook personal computer and the like. As shown in FIG. **1**, the power supply system related to the present invention is applied to electronic device in the case example of a portable handheld Personal Digital Assistant (hereinafter referred to as PDA).

Additionally, although the power supply system concerning this invention is applied to an electronic device, such as a PDA and the like, and explained here, the power supply system related to the present invention only illustrates an example device. Irrespective of this, as an example, the power supply unit can also be suitably applied to an electric vehicle and the like.

As shown in FIG. **1**, the power supply system related to this invention is applied to an electronic device **10**, for example, comprises a Central Processing Unit (CPU) **11** which performs central control of each section; a Read-Only Memory (ROM) **12** which reads and memorizes usable information, a Random Access Memory (RAM) **13** which stores information temporarily; a non-volatile Flash Read-Only Memory (Flash ROM) **14** which memorizes usable Read/Write (R/W) information; a Liquid Crystal Display (LCD) **15** which performs screen display of the display information; an LCD driver **16** which performs screen display control of the LCD **15** by a display control signal transmitted from CPU **11**; a touch panel **17** which transmits input information entered by the touch operation on a user's LCD **15** to the CPU **11**; a communication interface **18** (here in after referred to as I/F) which controls communication with external equipment by infrared data communication (IrDA); connector communication, wireless Local Area Network (LAN) transmission method, and the like; a power supply system **20** which is the power supply of the electronic device **10** is equipped with a fuel cell and generates predetermined electric power; and each section except for the LCD **15** are connected by a bus **19**.

The CPU **11**, for example, reads an application program specified from among the system programs stored within the ROM **12** or the Flash ROM **14** and various application programs, and extracts them in the RAM **13**.

In addition, the CPU **11** temporarily stores various data within the RAM **13** in response to various directions input from the touch panel **17** or that which performs various processes according to the above-mentioned extracted application programs using these input directions and input data; and stores the processing result in the RAM **13** and displayed on the LCD **15**.

Additionally, the CPU **11** transmits to the power supply system **20** an indication signal for directing the power generation operation of the power supply system **20**, and a load drive state signal which indicates the details of the drive state of the electronic device **10**.

Also, the CPU **11** receives from the power supply system **20** a signal which indicates the details of the power generation state of the power supply system **20**, described later, and a signal which indicates abnormalities by thermal insulation damage to the power supply system **20** that have purportedly occurred.

Furthermore, the programs, data and the like memorized in ROM **12** and Flash ROM **14** can be set to a configuration which receives and stores part or all of these via a communication network and the I/F **18** from external equipment.

Although, the LCD **15** performs the screen display using a liquid crystal display method, this invention is not limited to this and can be substituted with an electroluminescent (EL) display (also referred to as ELD) and the like. The above-mentioned configuration illustrated a typical configuration example in the electronic device. Needless to say, the present invention may have other configurations.

### <<The first embodiment of the power supply system>>

Next, the first embodiment of the power supply system related to this invention will be explained.

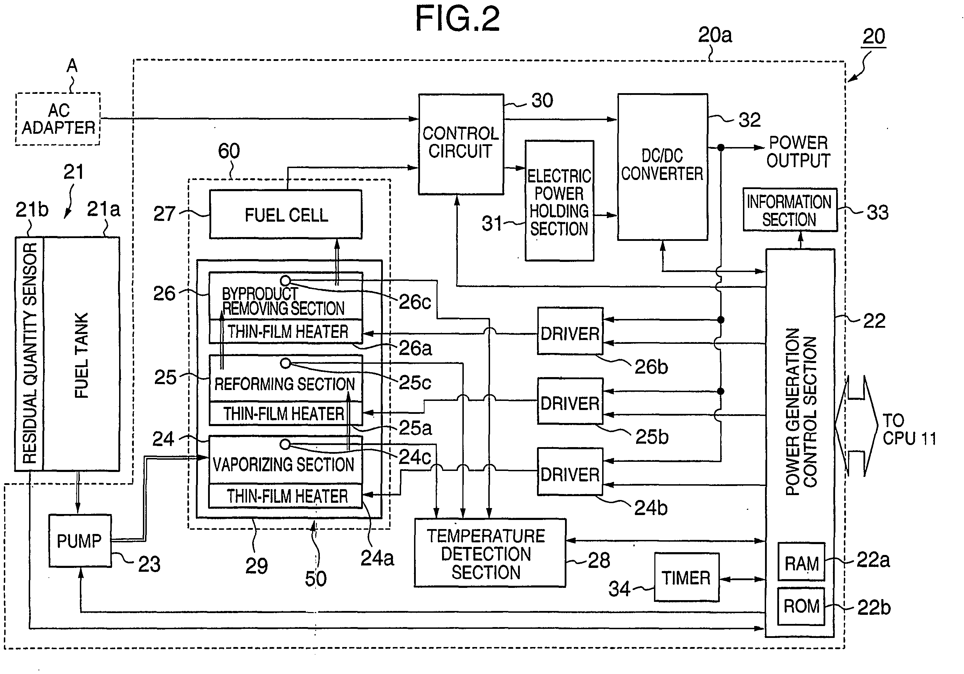

FIG. **2** is a block diagram showing the first embodiment of the power supply system concerning the present invention.

The embodiment related to the power supply system **20**, as shown in FIG. **2**, comprises divided sections equipped with a power generation module **20a** and a fuel cartridge **21**. The power generation module **20a** generates predetermined electric power (electrical energy) based on the fuel for power generation supplied from the fuel cartridge **21**. The fuel for power generation is enclosed in the detachable fuel cartridge **21**, and the fuel cartridge **21** is joined with the main power generation module **20a**.

Hereinafter, each component of the configuration will be explained in detail.

### <<Fuel cartridge>>

The fuel cartridge **21** is equipped with a fuel tank **21a** consisting of a sealed high-octane fuel container enclosed and filled with fuel for power generation constituted from liquid fuel or liquefaction fuel containing hydrogen, and joined with the power generation module **20a**.

Also, the fuel cartridge **21** can be further equipped with a residual quantity sensor **21b** which detects residual quantity of the fuel for power generation in the fuel tank **21a**.

Furthermore, the power generation module **20a** comprises a fuel supply section **23** for supplying fuel for power generation controlled by the power generation control section **22**. In order for the quantity necessary by a fuel cell **27** to produce electric power of predetermined voltage, fuel for power generation in the fuel tank **21a** is supplied to a vaporizing section **24** as needed via the fuel supply section **23**.

Here, the fuel for power generation employed in the power supply system, for example, although a mixed solution of methanol and water is used it is not limited to this. Methanol substitution with a liquid fuel type alcohol system, such as ethanol, butanol and the like; or dimethyl ether or isobutane which are gas at ambient temperature and ambient pressure; or a liquefaction fuel made up of hydrocarbon gas and the like are applicable.

Also, the fuel tank **21a**, for example, is provided with a control valve so the feed of fuel for power generation enclosed in the fuel tank **21a** only becomes available in the state where it is joined with the power generation module **20a**. Accordingly, the fuel cartridge **21** in the state where it is disjoined from the power generation module **20a**, the fuel for power generation does not leak to the outside of the fuel cartridge **21**.

The residual quantity sensor **21b** in the fuel cartridge **21**, for example, comprises a group of conductors made up of almost rod-shape conductors arranged in predetermined positions in the fuel tank **21a**. The electric resistance value between these conductors is measured and the residual quantity of the fuel for power generation enclosed in the fuel cartridge **21** is detected. Although these conductors, for example, are provided with a good conductor, such as carbon and the like, it is as effective as being formed in the inner circumference of the fuel tank **21a** with a printed pattern formed from gold and the like for example.

The power generation control section **22** has a built-in resistance measurement circuit which measures the electric resistance value between the conductors of the residual quantity sensor **21b**. The residual quantity of fuel for power generation is computed based on the measured electric resistance value.

The residual quantity sensor **21b** is not limited to such a resistance level method, and other sensors such as an optical sensor method, a fiber sensor method using optical fibers, an ultrasonic method, and the like which measure variations of the reflective time period of an ultrasonic wave can be employed. Also, the fuel cartridge **21** configuration is not limited to being a detachable type as it can be suitably formed in the power generation module **20a** and as one unit.

### <<Power generation module>>

The power generation module **20a**, as shown in FIG. 2, mainly comprises the pump (fuel supply section) **23,** a power generation section **60**, a chemical reaction section **50**, the fuel cell **27**, an electric power holding section **31**, a control circuit **30**, the power generation control section **22**, a DC-to-DC (DC/DC) converter **32**, an information section **33** and a timer **34**. The pump **23** (fuel supply section for power generation) performs delivery or stoppage of the fuel for power generation supplied from the fuel cartridge **21** in response to a control signal of the power generation control section **22**. A power generation section **60** generates predetermined electric power based on the fuel for power generation supplied via the pump **23** from the fuel cartridge **21**, which includes the chemical reaction section **50** and the fuel cell **27** provided with a thermal insulation structure. The electric power holding section **31** once holds the electric power produced in the power generation section **60**. The control circuit **30** controls the charging of the electric power holding section **31** and the power supply feed to the load based on a control signal from the power generation control section **22**. The power supply system **20** is provided with the DC-to-DC (DC/DC) converter **32** which outputs a power supply indication signal to the power generation control section **22** and supplies as the load of each of the configuration sections of the electronic device **10**. For example, the electric power output from the power generation section **60** and the electric power holding section 31 is changed to direct current (DC) based on a control signal from the power generation control section **22**. The power generation control section **22** transmits the status of the power generation module **20a** to the CPU **11** while controlling each section of the power generation module **20a** in response to indication signals received and the communicative action with the CPU **11**. For example, in the information section **33**, when detected abnormalities such as thermal insulation damage and the like in the chemical reaction section **50** occur, the problem in the form of a light, sound and the like is reported to the user. The timer **34** (timing device) counts the elapsed time from the startup operation of the power generation section **60** and outputs to the power generation control section **22** an elapsed time signal.

The chemical reaction section **50** comprises a plurality of chemical reactors which includes the vaporizing section **24**, a reforming section **25** and a byproduct removing section **26** (carbon monoxide (CO) and other residue). The vaporizing section **24** vaporizes the fuel for power generation delivered from the pump **23**. The reforming section **25** performs reforming of the fuel for power generation vaporized by the vaporizing section **24** to fuel the fuel cell **27**. The byproduct removing section **26** removes carbon monoxide that occurred in the fuel during reforming by the reforming section **25**.

Additionally, the chemical reaction section **50** further comprises the thin-film heaters **24a**, **25a**, **26a**; the temperature sensors **24c**, **25c**, **26c**; a temperature detection section **28** and a thermal insulation container **29**. The thin-film heaters (heating sections) **24a**, **25a**, **26a** are provided in each of the chemical reactors of the vaporizing section **24**, the reforming section **25** and the byproduct removing section **26**; which heat each of the chemical reactors. The temperature sensors **24c**, **25c**, **26c** (temperature detection section) detect and output the temperature of each of the chemical reactors of the vaporizing section **24**, the reforming section **25** and the byproduct removing section **26**. The temperature detection section **28** outputs the temperature information output from the temperature sensors **24c**, **25c**, **26c** to the power generation control section **22** and the thermal insulation container **29** insulates the vaporizing section **24**, the reforming section **25**, the byproduct removing section **26**, and the thin-film heaters **24a**, **25a**, **26a**.

The power generation module 20a further comprises the drivers **24b**, **25b**, **26b**; RAM **22a** and ROM **22b**. The drivers **24b**, **25b**, **26b** supply the electric power for driving the thin-film heaters **24a**, **25a**, **26a** based on a control signal from the power generation control section **22** using a portion of the electric power generated by the power generation section **60**. The power generation control section **22** has built-in RAM **22a** and ROM **22b**.

Furthermore, the power supply system **20**, for example, when an AC adapter **A** is connected to an AC power supply for domestic use and configured with a usable connection to the AC adapter **A** which changes alternating current into predetermined direct current, the control circuit **30** is substituted with the fuel cell **27** and supplies direct current output from the AC adapter **A** to the electric power holding section **31** and the DC/DC converter **32**, and supplied to the load.

### <<Chemical reaction section>>

The chemical reaction section **50** is provided with chemical reactors in the vaporizing section **24**, the reforming section **25** and the byproduct removing section **26** in a configuration using, for example, methanol (CH₃OH and water (H₂O) as the fuel for power generation so that hydrogen gas (H₂) for the fuel cell **27** can be produced from the fuel for power generation.

The vaporizing section **24** heats and vaporizes the fuel for power generation supplied from the fuel cartridge **21** by the thin-film heater **24a** through a vaporization process.

The reforming section **25** transforms the fuel for power generation vaporized by the vaporizing section **24** into mixed gases of hydrogen (H₂) and byproduct carbon dioxide (CO₂) through a steam reforming reaction process.

The byproduct removing section **26** transforms the carbon monoxide gas (CO) included as a residual byproduct of trace (very small) quantity in the mixed gases transformed by the reforming section **25** into carbon dioxide gas, and removes it.

Also, the fuel cell **27** produces the power supply to the load **DVC** and the operating power of each section of the power generation module **20a** with a high concentration of hydrogen gas produced in the reforming section **25** and the byproduct removing section **26**.

In more detail, the vaporizing section **24** which makes the methanol and water vaporize by the thin-film heater **24a**, controlled by the driver **24b**, is set up to the atmospheric temperature condition of around the boiling point in general of methanol and water, which is the fuel for power generation supplied via the pump **23** from the fuel cartridge **21**, and the derivative to the reforming section **25**.

Additionally, the vaporizing section **24** and thin-film heater **24a** are provided in the thermal insulation container **29** have a thermal insulation structure to prevent a decline in heat efficiency, and heat from the thin-film heater **24a** radiates to the periphery as described later.

The reforming section **25** transforms into hydrogen gas (H₂) the fuel for power generation, which is introduced and vaporized by the vaporizing section **24** from the fuel cell **27**. Specifically, the thin-film heater **25a** controlled from the driver **25b** with the to methanol and water introduced and vaporized as mentioned above, by setting the atmospheric temperature condition of 300 degrees Centigrade (300° C) in general (around 572 degrees Fahrenheit (572° F)), the hydrogen and carbon dioxide transform into mixed gases by the chemical reaction shown in the following formula (1):

CH₃OH + H₂O → 3H₂ + CO₂ (1)

Subsequently, the byproduct removing section **26** removes the carbon monoxide that is poisonous to the human body in the byproducts of trace quantity contained in the mixed gases, which include hydrogen and carbon dioxide as the main ingredients produced with the reforming section **25**. By setting the thin-film heater **26a** controlled by the driver **26b** to a predetermined atmospheric temperature condition, this residual carbon monoxide gas transforms into a hydrogen and carbon dioxide gas mixture by the chemical reaction shown in following formula (2):

Additionally, inside the byproduct removing section **26** well-known catalysts Platinum Pt, Alumina Al₂O₃ (aluminum oxide) and the like are carried for advancing most efficiently the chemical reaction shown in formula (2):

CO + H₂O → H₂ + CO₂ (2)

Since the chemical reaction shown in formula (2) is an exothermic reaction (also known as an exothermal reaction), the configuration is designed for the heat produced in the byproduct removing section **26** to be also conducted in the reforming section **25**.

Moreover, the byproduct removing section **26** and the thin-film heater **26a** as well are shielded with the thermal insulation container **29** to prevent a decline in the heat efficiency of the heat radiating to the periphery and insulated from ambient air. In addition, the byproduct removing section **26** is also effective as a heat dissipation means for discharging this reaction heat.

Furthermore, the chemical reaction as illustrated in formula (2) requires water (H₂O). Although reaction water remained with the reforming section **25** which is allocated in the water supplied as fuel for power generation from the fuel cartridge **21**, when this water is of insufficient quantity relative to the carbon monoxide gas within the mixed gases, a structure which supplies the deficient water portion can be attached to the byproduct removing section **26**.

Also, the byproduct removing section **26** transforms carbon monoxide into carbon dioxide gas by the chemical reaction shown in formula (3). Accordingly, the carbon monoxide gas which is not eradicated in the combustion of the chemical reaction shown in formula (2) can be removed from the above-mentioned mixed gases, and the concentration of the carbon monoxide gas within the above-mentioned mixed gases can be reduced to a level which does not negatively influence or endanger the human body.

2CO + O₂ → 2CO₂ (3)

Moreover, within the byproduct removing section **26** a well-known catalyst for oxidizing by chemical reaction is carried and only carbon monoxide gas is selectively shown in formula (3), without consuming the hydrogen gas contained in the mixed gases introduced from the reforming section **25**.

Subsequently, the configuration of each chemical reactor will be explained in detail.

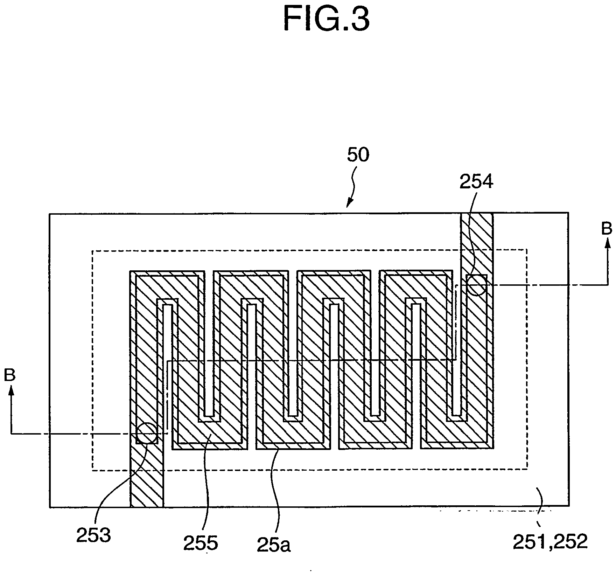

FIG. **3** is a transmission plan showing an example of the configuration applicable to the reforming section of the chemical reaction section in the embodiment.

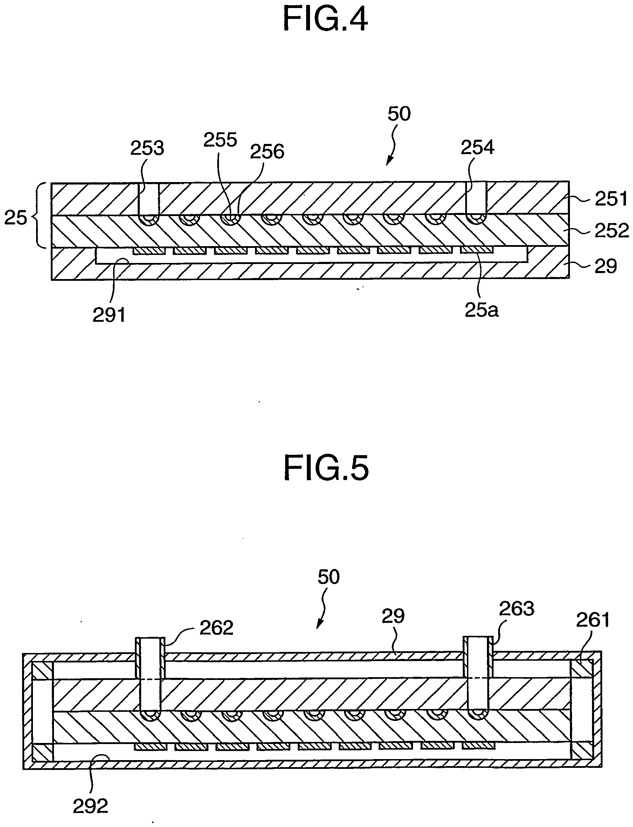

FIG. **4** is a sectional drawing in the **B-B** surface of the reforming section in FIG. **3**.

FIG. **5** is the same sectional drawing as FIG. **4** in another example of the configuration applicable to the reforming section of the chemical reaction section in the embodiment.

Each of the chemical reactors in the chemical reaction section **50** in this embodiment are provided from micro-reactors, for example, each configuration has a substrate comprised of a silicon substrate and has a passage provided of micro-fabrication on that substrate.

These micro-reactors consist of a configuration, for example, when applied to the reforming section 25 in this embodiment, as shown in FIGs. 3 and 4, whereby the mixed gas of methanol and water flowed in the passage is reformed and configured so that mixed gases of hydrogen and carbon dioxide are discharged. Each micro-reactor comprises a feed port 253; substrates 251, 252 (for example, silicon substrate); a discharge vent 254; a passage 255; and a reaction catalyst layer 256. The feed port **253** introduces the mixed gas of methanol and water in between the substrates **251**, **252**. The discharge vent **254** discharges the resultant mixed gases hydrogen and carbon dioxide. The passage **255** which zigzags (meanders) is provided in between the feed port **253** and the discharge vent **254**. The reaction catalyst layer **256** is carried in part at least on the inner wall surface of the passage **255**. Here, the passage **255** cross-sectional and horizontal overall length intersects at right angles to each other in the direction of movement (traveling direction), for example, each has a dimension of less than **500** micrometers (**500** µm) micro-fabrication. Also, the passage **255** zigzags to enlarge the reaction area of the reaction catalyst layer **256** with the mixed gas methanol and water. Furthermore, the catalyst layer consists of a well-known Copper (Cu), Zinc oxide (ZnO), Alumina. (Al₂O₃) and the like based catalysts for advancing efficiently the chemical reaction shown in formula (1).

Since the chemical reaction shown in formula (1) is an endothermic reaction (also referred to as endothermal reaction which absorbs heat), in order for the reforming section **25** to advance most efficiently this reaction, the thin-film heater **25a** is provided along the passage **255**. Also, the thin-filmheater **25a** can be a configuration formed in the entire surface of the substrate **252**.

In addition, the chemical reactor in this embodiment has a thermal insulation structure of vacuum insulation and the like to elevate heat efficiency in heating of the passage. The thermal insulation container **29** encloses (covers) the thin-film heater **25a**. This shielding is constructed so the thin-filmheater **25a** is thermally insulated from ambient air, and configured so that it restrains (controls) the heat by the thin-film heater 25a radiating to the periphery. The thermal insulation container **29** has a hollow section **291** which surrounds the thin-film heater **25a**. This hollow section **291** can realize a thermal insulation capability by enclosing gas, such as air, Freon, carbon dioxide gas or by making the hollow section **291** into an almost vacuum.

Furthermore, shown in FIG. **5** is another feasible configuration applicable to the chemical reactor in this embodiment. While provided with a micro-reactor consisting of the substrates **251**, **252** and the thin-film heater **25a** which are the same as shown in FIG. **4** mentioned above, the structure can be set to the thermal insulation container **29** in a form surrounding (encircling) entirely the substrates **251**, **252**. In this case, the substrates **251**, **252** are mounted via a support medium **261** inside the thermal insulation container **29**. In addition, for example, the support medium **261** is provided in the upper and lower four corners of the substrates **251**, **252**. Moreover, the feed port **253** and the discharge vent **254** of the substrate **251** are provided with a feed port withdrawal tube **262** of and a discharge vent withdrawal tube **263** for drawing out to the outside of the thermal insulation container **29**. Accordingly, in between the thermal insulation container **29** and the substrates **251**, **252**, a hollow section **292** is formed, except for the section of the support medium **261**. The substrates **251**, **252** and thin-film heater **25a** are entirely insulated from ambient air, and insulation efficiency can be further improved. Besides, the hollow section **292** which surrounds gas, such as air, Freon, carbon dioxide gas, or creates an almost vacuum is the same as the embodiment mentioned above.

Also, although explained in the case applied to the reforming section **25** mentioned above, in the vaporizing section **24** and byproduct removing section **26** of the other chemical reactors, the same structure is applicable.

Moreover, the thermal insulation container **29**, entirely encloses each chemical reactor of the vaporizing section **24**, the reforming section **25** and the byproduct removing section **26**, thereby it can be formed as a unit in one body.

### <<Fuel cell>>

The fuel cell **27** comprises a solid macromolecule type fuel cell body.

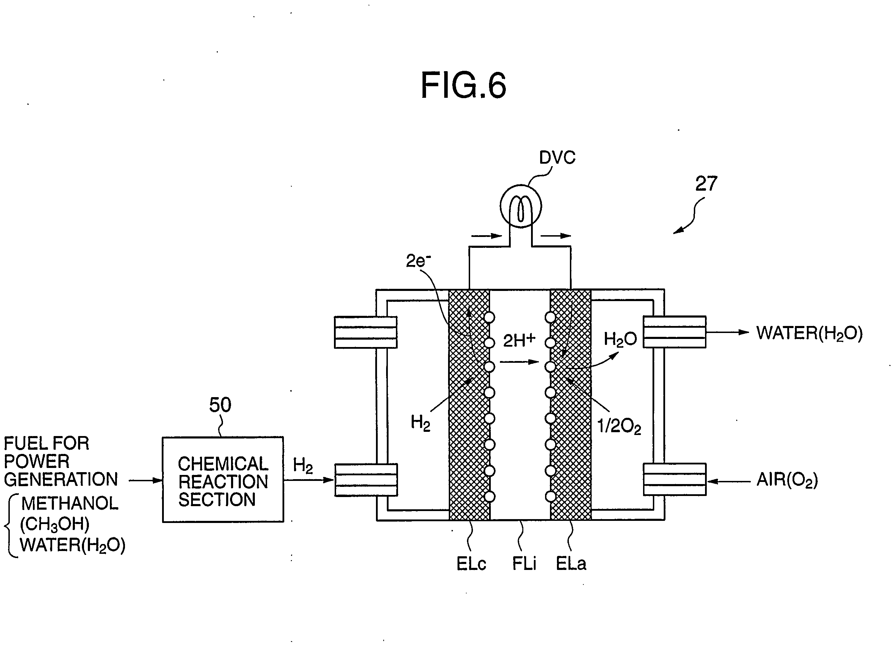

FIG. **6** is an outline block diagram showing an example of one configuration of the fuel cell applicable to the power generation section related to the embodiment.

As shown in FIG. **6**, briefly, the fuel cell **27** comprises an ion conductive film membrane **FLi**, an air electrode **ELa**, and a fuel electrode **ELc**. The ion conductive film membrane (ion exchange membrane) **FLi** is interposed in between the air electrode **ELa** (anode - positively charged) and the fuel electrode **ELc** (cathode - negatively charged). The air electrode **ELa** consists of a carbon electrode to which catalyst particulates of platinum and the like are adhered. The fuel electrode **ELc** consists of a carbon electrode to which catalyst particulates of platinum or platinum-ruthenium are adhered. Additionally, the fuel electrode **ELc** is supplied hydrogen gas (H₂) extracted from the fuel for power generation by the above-mentioned chemical reaction section **50**. On the other hand, the air electrode **ELa** is supplied with oxygen gas (O₂) within the air. Accordingly, power generation is performed by an electromechanical reaction shown below and electric power is generated.

Specifically, by supplying hydrogen gas (H₂) to the fuel electrode **ELc**, as shown in the following reaction formula (4), the hydrogen ion (proton; H⁺) with the single electron (e⁻) separated as the above-mentioned catalyst occurs and then passes to the air electrode **ELa** side via the ion conductive film membrane **FLi**. The electron (e⁻) is taken out by the carbon electrode configuration of the fuel electrode ELc, thereby electric power is produced and the load DVC is supplied.

3H₂ → 6H⁺ 6e⁻ (4)

Meanwhile, by supplying oxygen gas (O₂) within the air to the air electrode **ELa**, as shown in the following reaction formula (5), the hydrogen ion (H⁺) and oxygen gas (O₂) within the air passed to the ion conductive film membrane **FLi** and the electron (e⁻) went via the load **DVC** to the above-mentioned catalyst, thus the air reacts and water (H₂O) is produced.

6H⁺ + (3/2) O₂ + 6e⁻ → 3H₂O (5)

Such a series of electromechanical reactions (chemical reaction formulas (4) and (5)) advance under a low-temperature environment comparatively at around room temperature - 80 degrees Centigrade (room temperature - 80°C)(room temperature - **176** degrees Fahrenheit (176° F)) and byproducts of other than electric power become only water (H₂O) basically.

In addition, the power supply drive (voltage/current) supplied to the load **DVC** by the electromechanical reaction method (formulas (4) and (5)) mentioned above, depends on the quantity of hydrogen gas supplied to the fuel electrode of the fuel cell **27**. Therefore, the electrical energy of the electric power (generation of electric power) produced by the fuel cell **27** can be regulated arbitrarily by the power generation control section **22** controlling the pump **23**, and controlling the quantity of hydrogen gas supplied to the fuel electrode.

Thus, initially the fuel for power generation is supplied to the vaporizing section **24** via the pump **23** from the fuel cartridge **21**, then vaporized by the vaporizing section **24**, and transformed into a mixed gas of hydrogen and carbon dioxide by the reforming section **25**. Next, the carbon monoxide gas contained in this mixed gas as a very small quantity of impurity is then eradicated and transformed into carbon dioxide gas by the byproduct removing section **26**, and lastly supplied to the fuel cell **27** as a high concentration of hydrogen gas.

### <<Electric power holding section>>

The control circuit **30** controls the output destination of the electric power supplied from the fuel cell **27** based on a charge control signal from the power generation control section **22**, charges the electric power holding section **31** and performs output to DC/DC converter **32**. The electric power holding section **31** becomes the main power supply instead of the fuel cell **27** at startup time of the electronic device **10**.

In particular, when a power supply "**ON**" operation of the electronic device **10** is accomplished (i.e. the device is switched "**ON**"), the electric power accumulated in the electric power holding section **31** is output to the drivers **24b**, **25b**, **26b** via the DC/DC converter **32**. Also, electric power to the thin-film heaters **24a**, **25a**, **26a** is supplied and heated. Each of the chemical reactors is set as a predetermined temperature. The fuel cell **27** commences power generation by introducing the fuel for power generation from the pump **23** into the vaporizing section **24**. After the power generation startup, the power generation control section **22**, after performing full charging of the electric power holding section **31**, switches the power output point of the control circuit **30** to the DC/DC converter **32** from the electric power holding section **31.** Furthermore, control of the fuel injection quantity of fuel for power generation supplied from the pump **23** by the power generation control section **22** is initiated after being heated sufficiently for provision of power generation by the thin-film heaters **24a**, **25a**, **26a**.

Additionally, during power generation of the fuel cell **27** for example, the control circuit **30** always controls the electric power holding section **31** so that it remains fully charged. Also, when a power supply "**OFF**" operation is accomplished (i.e. the device is switched "**OFF**") and full charging of the electric power holding section **31** is not performed, the control circuit **30** suspends (stops) the power supply system **20** after performing full charging of the electric power holding section **31**.

### <<Information section>>

The information section **33**, for example, comprises at least one luminescence means, such as Light Emitting Diodes (LEDs) and the like; a display means which has a display panel, such as a Liquid Crystal Display (LCD), electroluminescent (EL) display and the like; an audio output means, such as a speaker and the like; and from within an oscillating generation means, such as vibrator and the like.

The information section **33**, when equipped with a display means for example, digital display of the residual quantity of the fuel for power generation computed by the power generation control section **22**; rate (percentage) relative to volume of the fuel tank **21a**; and/or a gradual five-level display and the like can be performed.

Again similarly, set to the abnormal detection process at startup time and abnormal detection process at balance (equalization) time, a message indicator of the purported abnormal detection and the like of thermal insulation damage and the like can be performed as described later.

When the information section **33** comprises an audio output means and the display details by the displaymeans mentioned above can be made into a message and performs an audio output.

### «Power generation»

Next, the functions of the power generation control section **22** will be explained.

At startup time of the power supply system **20**, accompanying the startup of the electronic device **10** (load), the electric power accumulated in the electric power holding section **31** is supplied to the drivers **24b**, **25b**, **26b**. In this startup operation, the power generation control section **22** enters a temperature measurement signal of the temperature detected in the temperature sensors **24c**, **25c**, **26c** from the temperature detection section **28**. The power generation control section **22** outputs to the drivers **24b**, **25b**, **26b** a temperature control signal based on the temperature measurement signal and performs temperature control of the thin-film heaters **24a**, **25a**, **26a**.

The power generation control section **22** outputs a fuel supply control signal to the pump **23** and concurrently performs temperature control of the thin-film heaters **24a**, **25a**, **26a**; controls delivery and stoppage of the fuel for power generation to the vaporizing section **24** from the fuel cartridge **21** by controlling the operation (feed operation, suspension operation) of the pump **23**; and regulates electric power generation of the fuel cell **27** by controlling the quantity of fuel supplied for power generation.

Specifically, the power generation control section **22** initially each of the chemical reactors of the vaporizing section **24**, the reforming section **25** and the byproduct removing section **26**, along with the fuel cell **27** are in a non-operational state. When a command signal activates the load received from the CPU **11**, this initiates operation of each chemical reactor of the vaporizing section **24**, the reforming section **25** and the byproduct removing section **26**, along with the fuel cell **27**; initiates feed of the fuel for power generation to the vaporizing section **24**; initiates operation of the fuel supply of the pump **23** and temperature control of the thin-film heaters **24a**, **25a**, **26a.** Additionally, the power generation control section **22** comprises a function (power supply measurement means) which measures the electric energy (power supply quantity at startup time) supplied to each thin-film heaters by the time the electric power (power supply) and each chemical reactor become the predetermined startup state and supplied to each of the thin-film heaters in connection with the temperature control of the thin-film heaters **24a**, **25a**, **26a** at startup time mentioned above.

Additionally, the power generation control section **22**, then operates the vaporizing section **24**, the reforming section **25**, the byproduct removing section **26** and the fuel cell **27** and electric power generation is produced, as well as receives a load drive state signal which indicates the details of the load drive state at the operation time which drives the load from the CPU **11**. Also, the power generation control section **22** inputs a power supply signal which indicates the power supply from the DC/DC converter **32**. The power generation control section **22** outputs a fuel supply control signal to the pump **23** based on the received load drive state signal and the inputted power supply signal, thus controlling the feed operation of the pump **23** as well as regulate the electric power generation of the fuel cell **27**. The power generation control section **22** performs temperature control of the thin-filmheaters **24a**, **25a**, **26a** based on the received load drive state signal and the inputted power supply signal concurrently with the feed operation control of the pump **23**. In this manner, the power generation control section performs control of power generation by the fuel cell **27**.

Moreover, the power generation control section **22** comprises the function (power supply measurement means) which measures on every predetermined time interval, for example, the electric power (power supply) supplied to each of the thin-film heaters in connection with the temperature control of the thin-filmheaters **24a**, **25a, 26a** at operation time mentioned above.

In addition, the power generation control section **22** outputs a charge control signal to the control circuit **30** and controls whether the electric power output destination supplied from the fuel cell **27** is to charge the electric power holding section **31** or used as the DC/DC converter **32**. Furthermore, the power generation control section **22** inputs a signal which indicates the power supply outputted from the DC/DC converter **32** and outputs a conversion control signal to the DC/DC converter **32** based on the received power supply. The DC/DC converter **32** transforms the sum total of electric power of the power generation from the fuel cell **27** or the discharge from the electric power holding section **31** into direct current suitable to the load based on the conversion control signal.

For example, the power generation control section **22** when the load drive state signal received from the CPU **11** indicates that a large power supply (a heavy load) is required of the electronic device **10** outputs a conversion control signal to DC/DC converter **32** so that the electric power which is accumulated (stored up) in the electric power holding section **31** in addition to the electric power of the fuel cell **27** is also made to output.

Additionally, in the state of driving the vaporizing section **24**, the reforming section **25**, the byproduct removing section **26** and the fuel cell **27**, the power generation control section **22** inputs a resistance signal from the residual quantity sensor **21b**, and calculates the residual quantity of the fuel for power generation in the fuel tank **21a** from the resistance signal. The power generation control section **22** transmits the residual quantity of the computed fuel for power generation to CPU **11**. Also, when there is little remaining residual quantity, the power generation control section makes a status report to the information section **33**.

Moreover, the ROM **22b** memorizes (stores) a discrimination reference value for abnormal discrimination in the abnormal detection process at startup time and the abnormal detection process at operation time described later for each of the vaporizing section **24**, the reforming section **25** and the by product removing section **26**. Specifically, for example, the regulated startup time indicates the time period allowed value required at startup until it attains the regulated startup temperature from initiation of the startup of the power supply system **20**; the reference power supply quantity indicates the power quantity which must be supplied to the thin-film heaters **24a**, **25a**, **26a** while attaining the regulated startup temperature from initiation of the startup; the temperature change tolerance level at operation time indicates the tolerance level value of the temperature change at operation time of the power supply system **20**; the reference power supply at operation time indicates the proper value of electric power supplied to each of the thin-film heaters at operation time; the fuel supply quantity tolerance level indicates the tolerance level variation of the fuel injection quantity of fuel for power generation at operation time; the power supply tolerance level at operation time indicates the tolerance level variation of the electric power supplied to each of the thin-film heaters at operation time; and the like are memorized.

In addition, the power generation control section **22** executes an abnormal detection process at startup time and an abnormal detection process at operation time described later. Thus, by execution of an abnormal detection process at startup time, the power generation control section **22** detects whether or not abnormalities of damage (thermal insulation damage) to the thermal insulation container **29** at startup time of the fuel cell **27** and the like are occurring. Also, by execution of an abnormal detection process at operation time, the power generation control section **22** detects whether or not abnormalities by thermal insulation damage and the like in the thermal insulation container **29** occurred during power generation of the fuel cell **27**. This will be explained later in detail. «Abnormal detection process at startup time»

Next, the operation of the abnormal detection process at startup time in the power supply system **20** will be explained.

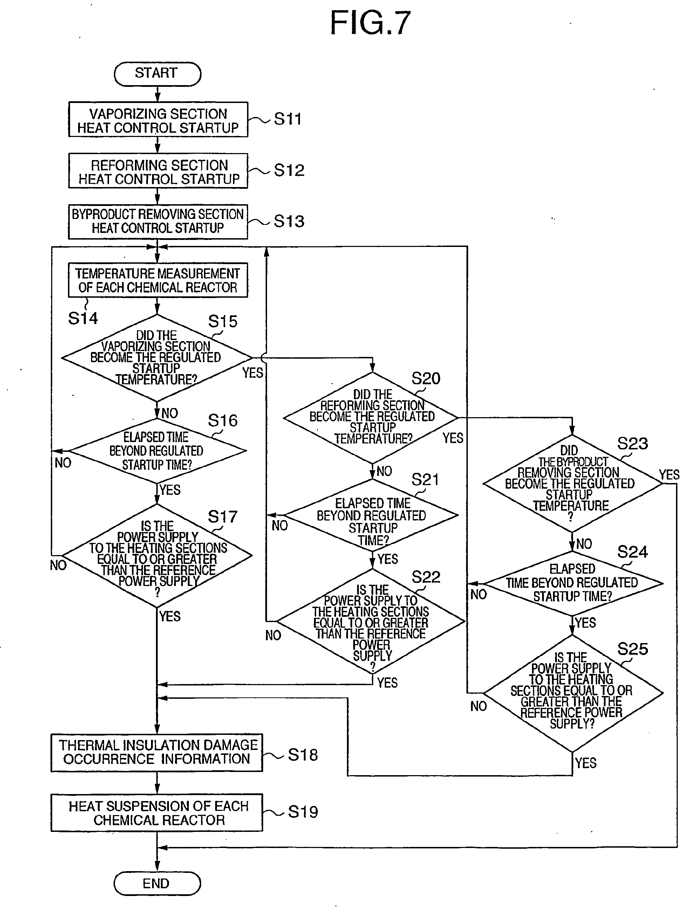

FIG. **7** is a flowchart which shows the operation of the abnormal detection process at startup time of the power supply system.

The abnormal detection process at startup time is a process performed at startup time by the power supply system **20**, accompanying the startup of the electronic device **10**, of the thermal insulation container **29** of the chemical reaction section **50**. For example, it is a process for detecting whether or not abnormalities by thermal insulation damage and the like are occurring, such as when the thermal insulation structure is damaged from some impact and the like causing a loss of the vacuum inside the container.

The abnormal detection process at startup time, as shown in FIG. **7**, the power generation control section **22** executes the abnormal detection process at startup time triggered by the operation startup from the power supply **"ON"** operation of the electronic device **10** being initiated (i.e. the device is switched **"ON"**). With the execution initiated the timer **34** times the elapsed time from the commencement time at operation startup.

Consequently, the power generation control section **22** initiates heat control by the thin-film heater **24a** of the vaporizing section **24** via the driver **24b** (Step **S11**). Secondly, the power generation control section **22** initiates heat control by the thin-film heater **25a** of the reforming section **25** via the driver **25b** (Step **S12**). Thirdly, the power generation control section **22** initiates heat control by the thin-film heater **26a** of the byproduct removing section **26** via the driver **26b** (Step **S13**). Next, the power generation control section **22** inputs the temperature measurement signal in response to the temperature detection signal of the temperature sensors **24c**, **25c**, **26c** from the temperature detection section **28** and acquires the temperature measurement (the temperature reading) of each chemical reactor of the vaporizing section **24**, the reforming section **25** and the byproduct removing section **26** as temperature at startup time (Step **S14**).

Subsequently, the power generation control section **22** reads the regulated startup temperature of the vaporizing section **24** from the ROM 22b and discriminates whether or not the temperature at startup time of the vaporizing section **24** is more than the regulated startup temperature acquired at Step **S14** (Step **S15**).

When the temperature at startup time of the vaporizing section **24** is not more than the regulated startup temperature (Step **S15**: NO), the power generation control section **22** reads the regulated startup time corresponding to the vaporizing section **24** from the ROM **22b** and acquires the current elapsed time from the timer **34**. Also, the power generation control section **22** discriminates whether or not the acquired elapsed time became more than the regulated startup time (Step **S16**).

When the elapsed time is less than the regulated startup time (Step **S16**; NO), the power generation control section **22** reverts to Step **S14**.

When the elapsed time is equal to or greater than the regulated startup time (Step **S16**; YES), the power generation control section **22** calculates the power quantity (power supply quantity at startup time) supplied to the thin-film heater **24a** from the commencement time at operation startup and reads the reference power supply quantity of the thin-film heater **24a** from the ROM **22b**. Also, the power generation control section **22** discriminates whether or not the power quantity supplied to the thin-film heater **24a** is more than the quantity of the reference power supply (Step **S17**).

When the power quantity supplied to the thin-filmheater **24a** is not more than the reference power supply quantity (Step **S17**; NO), the power generation control section **22** reverts to Step **S14**.

This Step **S17** discriminates whether or not the power quantity supplied to the thin-film heater is more than the reference power supply quantity when there is less power quantity supplied to the thin-film heater by some cause than the reference power supply quantity, and when the temperature reading of each section at the time expiration of the regulated startup time is lower than the preset temperature. A temperature decline is not that which is produced by thermal insulation damage of the thermal insulation container **29**, but a possibility that the power quantity supplied to the thin-film heater generated which is judged high according to a few amassed factors as it performs more accurate detection of the existence of thermal insulation damage. In addition, in order to simplify control, discrimination in this Step **S17** can be omitted.

When the power quantity supplied to the thin-filmheater **24a** is more than the reference power supply quantity (Step **S17**; YES), the power generation control section **22** judges high the possibility of abnormalities by thermal insulation damage in the thermal insulation container **29** and the like occurred; transmits a command signal "possibility of thermal insulation damage occurred is high" to the CPU **11**: and further outputs a command signal "possibility of thermal insulation damage occurred is high" to the information section **33** (Step **S18**).

In other words, abnormal detection at startup time, for example, when abnormalities produce some damage in the thermal insulation container **29** and thermal insulation structure damages occur, ambient air penetrates from the damaged section, the thermal insulation function deteriorates and heat leakage increases. The state based among others where the predetermined electric power is supplied to the thin-film heaters, a phenomenon in which the temperature of each chemical reactor will not increase to a set value occurs. When a phenomenon in which the temperature of each chemical reactor does not attain a set value is detected, it judges with the possibility that thermal insulation damage has occurred as being high.

The information section **33** reports a command "possibility that thermal insulation same occurred is high" to the user via audio, a screen display, optical and the like. Also, the power generation control section **22** outputs a temperature control signal to the drivers **24b**, **25b**, **26b** so that the feed of the electric power to the thin-film heaters **24a**, 25a 26a can be suspended, suspends heating of each chemical reactor and suspends the operation (Step **S19**). Thereby, the abnormal detection process is terminated at startup time.

Next, when the temperature reading of the vaporizing section **24** is more than the preset temperature (Step **S15**; YES), the power generation control section **22** reads the regulated startup temperature of the reforming section **25** from ROM **22b** and discriminates whether or not the temperature at startup time is more than the regulated startup temperature of the reforming section **25** acquired at Step **S14** (Step **S20**).

When the temperature at startup time of the reforming section **25** is not more than the regulated startup temperature (Step **S20**; NO), the power generation control section **22** reads the regulated startup time in relation to the reforming section **25** from ROM **22b** and acquires the current elapsed time from the timer **34**.

Also, the power generation control section **22** discriminates whether or not the acquired elapsed time exceeds (continues beyond) the regulated startup time (Step **S21**). When the elapsed time does not exceed the regulated startup time (Step **S21**; NO), the power generation control section **22** reverts to Step **S14**.

When the elapsed time is equal to or exceeds (greater than) the regulated startup time (Step **S21**; YES), the power generation control section **22** calculates the power quantity (power supply quantity at startup time) supplied to the thin-film heater **25a** from the commencement time at operation startup and reads the reference power supply quantity of the thin-film heater **25a** from ROM **22b**.

Additionally, the power generation control section **22** discriminates whether or not the power quantity supplied to the thin-film heater **25a** is more than the reference power supply quantity (Step **S22**). When the power quantity supplied to the thin-film heater **25a** is not more than the reference power supply quantity (Step **S22**; NO), the power generation control section **22** reverts to Step **S14**.

When the power quantity supplied to the thin-film heater **25a** is more than the reference power supply quantity (Step **S22**; YES), the power generation control section **22** judges high the possibility that abnormalities by thermal insulation damage in the thermal insulation container **29** and the like occurred, and progresses to Steps **S18** and **S19**.

Next, when the temperature reading of the reforming section **25** is more than the preset temperature (Step **S20**; YES), the power generation control section **22** reads the regulated startup temperature of the byproduct removing section **26** from ROM **22b** and discriminates whether or not the temperature at startup time of the byproduct removing section **26** acquired at Step **S14** is more than the regulated startup temperature (Step **S23**).

Similarly, when the temperature at startup time of the byproduct removing section **26** is not more than the regulated startup temperature (Step **S23**; NO), the power generation control section reads the regulated startup time in relation to the byproduct removing section **26** from ROM **22b** and acquires the current elapsed time from the timer **34**. Also, the power generation control section **22** discriminates whether or not the acquired elapsed time exceeds (continues beyond) the regulated startup time (Step **S24**). When the elapsed time does not exceed the regulated startup time, the power generation control section **22** reverts to Step **S14.**

When the elapsed time is equal to or exceeds (greater than) the regulated startup time (Step **S24**; YES), the power generation control section **22** calculates the power quantity (power supply quantity at startup time) supplied to the thin-film heater **26a** from the commencement time of the startup operation and reads the reference power supply quantity of the thin-film heater **26a** from ROM **22b**. Also, the power generation control section **22** discriminates whether or not the power quantity currently supplied to the thin-film heater **26a** is more than the reference power supply quantity (Step **S25**). When the power quantity currently supplied to the thin-film heater **26a** is not more than the reference power supply quantity (Step **S25**; NO), the power generation control section **22** reverts to Step **S14**. When the power quantity supplied to the thin-film heater **26a** is more than the reference power supply quantity (Step **S25** ; YES), the power generation control section **22** judges high the possibility of abnormalities by thermal insulation damage in the thermal insulation container **29** and the like occurred, and progresses to Steps **S18** and **S19**.

Furthermore, when the temperature reading of the byproduct removing section **26** is more than the preset temperature (Step **S23**; YES), the power generation control section **22** judges as a normal abnormality in the thermal insulation container **29** and the abnormal detection process is terminated at startup time.

### <<Abnormal detection process at operation time>>

Next, the operation of the abnormal detection process at operation time in the power supply system **20** will be explained.

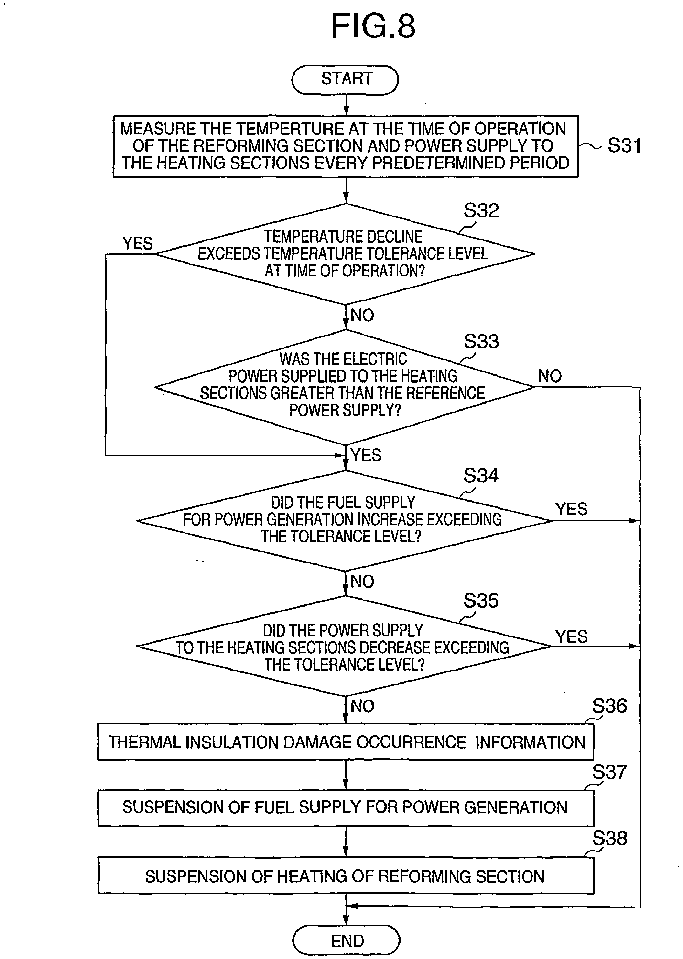

FIG. **8** is a flowchart which shows operation of the abnormal detection process at operation time of the power supply system.

The abnormal detection process at operation time is performed continuously (ongoing) by the power generation operation by the power supply system **20**; performed when in a balanced operating state; performed repeatedly at predetermined time intervals; and set during activity of the electronic device **10**. The abnormal detection process is for detecting occurrence of abnormalities by thermal insulation damage and the like of the thermal insulation container **29** in the chemical reaction section **50**.

Here, in the abnormal detection process at operation time illustrated below to perform the abnormal detection process is focused only on the reforming section **25** of a plurality of chemical reactors of the chemical reaction section **50** at operation time. This is because the structure of the reforming section **25** has a temperature level higher than the vaporizing section **24** and the byproduct removing section **26** and the greatest influence tends to be observed in the temperature change when abnormalities by thermal insulation damage of the thermal insulation container **29** occurred. However, the present invention is not limited to this as besides the reforming section **25** the configuration is also designed to check (examine) both sides of either the vaporizing section **24** or the byproduct removing section **26**. In this case, even minor damage can be detected more quickly.

In the abnormal detection process at the time of operation, the power generation control section **22** as shown in FIG. **8**, first the process continues in a period set previously for every predetermined time interval; inputs the temperature measurement signal in relation to the temperature detection signal from the temperature sensor **25c** from the temperature detection section **28**; and acquires the current temperature of the reforming section **25** as the temperature at operation time.

The power generation control section **22** measures the current power supply supplied to the thin-film heater **25a** for every predetermined time interval (power supply measurement means). Also, the power generation control section **22** calculates the fuel supply quantity supplied for power generation supplied to the power generation section **60** based on the variation of the residual quantity obtained from the residual quantity sensor **21b** (fuel supply quantity detection means). In addition, the power generation control section **22** instructs RAM **22a** to memorize the temperature value at operation startup of the reforming section **25**; the power supply value currently supplied to the thin-film heater **25a**; and the fuel supply quantity value for power generation (Step **S31**).

Subsequently, the power generation control section **22** reads the value of the temperature change tolerance level at operation time of the reforming section **25** from ROM **22b**; compares the temperature change of every predetermined time interval and the temperature change tolerance level at operation time with the temperature at operation time of the reforming section **25** acquired in Step **S31**; and discriminates whether or not a rapid decline exceeds the temperature tolerance level at operation time occurred, that is to say, whether or not the temperature change at operation time and the quantity of temperature decline is greater than the value of the temperature change tolerance limit level at operation time(Step **S32**).

Also, when a phenomenon in which a rapid decline in temperature at operation time occurred (Step **S32**; YES), the power generation control section **22** progresses to Step **S34**.

On the other hand, when a phenomenon in which a rapid decline in the temperature at operation time of the reforming section **25** does not occur (Step **S32**; NO), the power generation control section **22** discriminates whether or not the previous electric power supplied to the thin-film heater **25a** acquired in Step **S31** is appropriate (Step **S33**). Specifically, the power generation control section **22** reads the reference power supply at the time of operation memorized previously by ROM **22b** and discriminates whether or not the electric power supplied to the thin-film heater **25a** in the period which acquires the temperature at operation time is greater than the reference power at operation time. This, in the power supply system **20**, for example, corresponding to the state of power supplied to the electronic device **10** (load) from the power supply system **20**, when the power supplied to the thin-film heater is equipped with a configuration controlled automatically, even if it is the cases of abnormalities by thermal insulation damage and the like of the thermal insulation container **29** occurred and a phenomenon in which the temperature of a chemical reactor and the electric power generation declines temporarily occurred, it can be controlled to cover the portion of the temperature decline by increasing automatically the power supplied to the thin-film heaters. Seemingly the situation is controlled so that the rapid temperature decline does not occur. In this case, occurrence of abnormalities can be detected only by supervising the presence of the rapid decline of the temperature at operation time. Then, add discrimination of whether or not there is any great increase in the power supplied to the thin-film heater and get rid of the leakage in detection of abnormalities in the thermal installation and the like.

Then, when the power supplied to the thin-film heater **25a** is not more than the reference power supply at operation time (Step S33; NO), the power generation control section **22** performs an abnormal detection process termination at operation time as having no abnormalities.

When the power supplied to the thin-film heater **25a** is more than the reference power supply at operation time (Step **S33**; YES), the power generation control section **22** progresses to Step **S34**.

Thus, a phenomenon when the temperature measurement of the reforming section **25** rapidly declines or a phenomenon in which the power to the thin-film heater **25a** supplied is greater than the proper value and on the other side tries to check (examine) whether or not in addition to thermal insulation damage of the thermal insulation container **29** to judge the probability that some abnormalities are occurring and the cause of the abnormality.

Next, in Step **S34**, the power generation control section **22** discriminates whether or not the rapid increase that occurred exceeds the tolerance level of fuel injection quantity directly before detecting the above-mentioned abnormalities by reading the fuel injection quantity for every predetermined time interval memorized by RAM **22a**. Specifically, the power generation control section **22** reads the fuel supply quantity tolerance level which shows the variation tolerance level of the fuel supply quantity at operation time memorized previously by ROM **22b** and discriminates whether or not the variation quantity of the fuel injection quantity is greater than the fuel supply quantity tolerance level. Also, when a rapid increase occurs which exceeds the fuel supply quantity tolerance level of the fuel supply quantity of fuel for power generation (Step **S34**; YES), the power generation control section **22** performs the abnormal detection process termination at operation time as having no abnormalities. This is because it is judged that the increase of power supplied to the thin-film heater **25a** corresponding to the rapid decline or this temperature change from a present temperature to the temperature of the reforming section **25** which is an endothermic reaction occurred when the fuel injection quantity of fuel for power generation rapidly increased.

Next, when a phenomenon in which the fuel supply quantity of fuel for power generation rapidly increases did not occur (Step **S34**; NO), the power generation control section **22** discriminates whether or not the rapid decline that occurred exceeds the tolerance level directly before detecting the above-mentioned abnormalities and reads the power supplied to the thin-film heater **25a** for every predetermined time interval memorized by RAM **22a** (Step **S35**). Specifically, the power generation control section **22** reads the power supply tolerance level at operation time which shows the variation tolerance level of the power supplied to the thin-film heater **25a** at operation time memorized previously by ROM **22b** and discriminates whether or not the variation quantity of the power supply is greater than the power supply tolerance level at operation time.

Additionally, when a rapid decrease occurs whereby the power supply tolerance level exceeds the power supplied to the thin-film heater **25a** at operation time (Step **S35**; YES), the power generation control section **22** performs the abnormal detection process termination at operation time. This is because it is judged that the increase in the power supplied to the thin-film heater **25a** corresponding to the rapid decline or this temperature change from a preset temperature of the reforming section **25** occurred when the power supplied to the thin-film heater **25a** rapidly decreased.

When a phenomenon in which the power supplied to the thin-film heater **25a** rapidly decreases (Step **S35**; NO), the power generation control section **22** judges abnormalities by thermal insulation damage and the like of the thermal insulation container **29** have occurred; transmits a command signal "possibility of thermal insulation damage occurred is high" to the CPU **11** and further outputted to the information section **33** (Step **S36**).

Accordingly, the judgment of an abnormal occurrence at operation time when the power generation operation by the power supply system **20** is performed, for example, once abnormalities in the thermal insulation damage and the like in the thermal insulation container **29** have occurred ambient air rapidly enters from the damage section; thermal insulation function rapidly declines; leakage of heat rapidly increases; temperature control is not suitable; temperature rapidly declines or a phenomenon in which the power supplied to the thin-film heater rapidly increases by the temperature control in response to the rapid decline of the temperature will occur. Then, when such a phenomenon is detected and there is a rapid increase of the fuel injection quantity or rapid decrease of the power supply to the thin-film heater, when no different dominant cause exists for thermal insulation damage it judges with the possibility that thermal insulation damage occurred is high.

Next, the information section **33** reports a command "possibility of thermal insulation damage occurred is high" to the user via audio, a screen display, optical and the like.

Additionally, the power generation control section **22** outputs a fuel supply control signal to the pump **23** so that feed of the fuel for power generation is suspended (Step **S37**); a temperature control signal is output to the drivers **24b**, **25b**, **26b** so that power feed to the thin-film heaters **24a**, **25a**, **26a** can be suspended (Step **S38**); and performs the abnormal detection process at operation time.

As mentioned above, according to the embodiment, at startup time of the power supply system **20** and each of the chemical reactors of the vaporizing section **24**, the reforming section **25** and the byproduct removing section **26** of the power generation section **60**, the presence of occurrences of abnormalities by thermal insulation damage and the like in the thermal insulation container **29** can be detected when reference power supply to the thin-film heater is supplied and the elapsed time from commencement of startup becomes the regulated startup time, based on discrimination of whether or not the temperature of each section becomes more than the preset temperature.

Additionally, according to the invention, occurrences of abnormalities by thermal insulation damage and the like of the thermal insulation container **29** are detectable by discrimination as it discriminates whether or not a rapid temperature decline from the preset temperature in the reforming section **25** occurred during the power generation operation of the power supply system **20**; whether or not the fuel supply quantity rapidly increased when the temperature rapidly declined occurred; and whether or not the power supplied to the thin-film heater **25a** rapidly declined. Furthermore, abnormalities by thermal insulation damage and the like of the thermal insulation container **29** can be detected by discrimination when a rapid temperature decline from the preset temperature does not occur in the reforming section **25**, it discriminates whether or not the power supplied to the thin-film heater **25a** is more than the reference power supply; whether or not the fuel supply quantity rapidly increased when the power supplied becomes more than the reference power supply; and whether or not the power supplied to the thin-film heater **25a** rapidly declined.

Additionally, thermal insulation damage to the thermal insulation container **29** from the information section **33** can report a command notification to the user that the possibility of occurrence is high.

By these, as according to the embodiment, without merely using this detector for exclusive purpose as a vacuum sensor or an atmospheric pressure sensor and the like, with execution of the abnormal detection process at startup time and operation time abnormality of the power supply system by thermal insulation damage and the like can be detected simply, together with the power supply system can be miniaturized and the cost can be reduced.

### <<The second embodiment of the power supply system>>

Next, the second embodiment of the power supply system related to this invention will be explained.

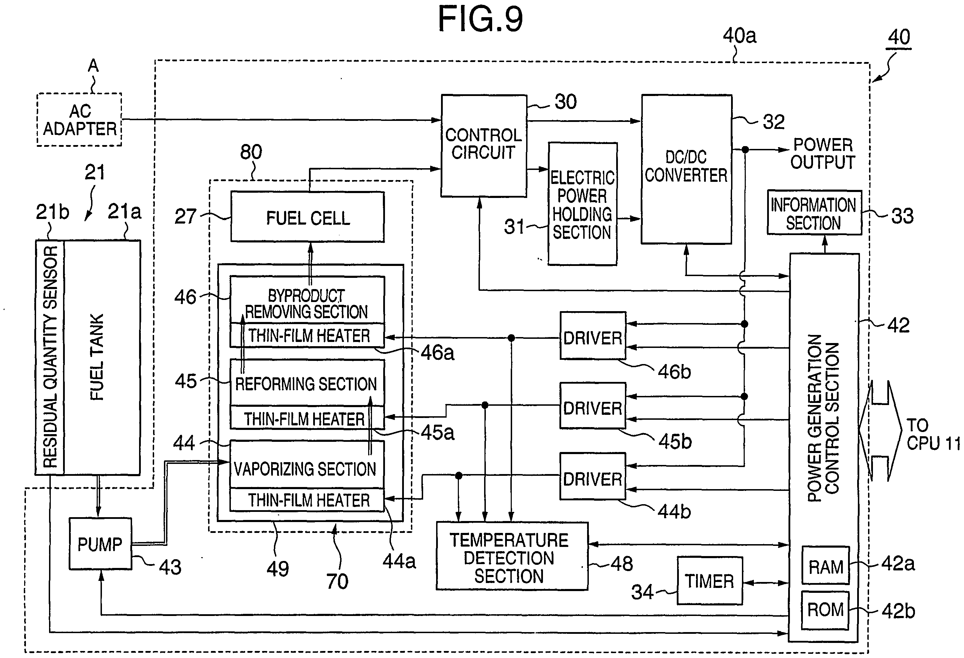

FIG. **9** is a block diagram showing the second embodiment of the power supply system related to the invention.

Here, the equivalent nomenclature correlated to the composition of the power supply system **20** of the first embodiment mentioned above is attached to simplify or omit from the description and explain mainly different sections.

The power supply system **40** related to this embodiment, as shown in FIG. **9**, comprises divided sections equipped with the fuel cartridge **21** and a power generation module **40a**. The fuel cartridge **21** is detachable. The power generation module **40a** generates predetermined electric power (electrical energy) based on the fuel for power generation supplied from the fuel cartridge **21**.

The power generation module **40a** concerning this embodiment, as shown in FIG. **9**, comprises a pump **43** which performs delivery or stoppage of the fuel for power generation supplied from the fuel cartridge **21**; a plurality of chemical reactors includes a vaporizing section **44**, a reforming section **45** and a byproduct removing section **46**; the thin-film heaters **44a**, **45a**, **46a** provided in each chemical reactor; a thermal insulation container **49**; along with comprising a power generation section **80** which has a chemical reaction section **70** and a fuel cell **27**; the drivers **44b**, **45b**, **46b** which supply power for driving the thin-film heaters **44a**, **45a**, **46a** using a portion of the power generated by the power generation section **80**; and a temperature detection section **48**. Furthermore, a power generation control section comprises RAM **42a** and ROM **42b**.

In this embodiment, the thin-film heaters **44a**, **45a**, **46a** not only heat the vaporizing section **44**, the reforming section **45** and byproduct removing section **46** respectively, but also are utilized for detection of the temperature of each section.

Detection of this temperature is performed by measuring the voltage in relation to the current for heating of each thin-film heater supplied to the thin-film heaters **44a**, **45a**, **46a** from the drivers **44b**, **45b**, **46b** in the temperature detection section **48**; outputs the result to a power generation control section **42**. The power generation control section **42** calculates the resistance value of each thin-film heater from the same measurement value and calculates the temperature corresponding to that resistance. Accordingly, the number of wires which penetrate the thermal insulation container **49** from each chemical reactor can be reduced; heat leaks via the wiring from the thermal insulation container **49** can be suppressed; heat efficiency can be elevated; as well as the cost can be reduced as temperature sensors are not used.

Next, the abnormal detection process at startup time in this power supply system **40** is essentially the same as the abnormal detection process at startup time of the power supply system **20** in FIG. **7**. In this second embodiment, measurement of the temperature in Step **S14** of FIG. **7** is performed using the thin-film heaters **44a**, **45a**, **46a**.

Furthermore, the abnormal detection process operation time in the power supply system **40** is essentially the same as the abnormal detection process at operation time of the power supply system **20** in FIG. **8**.

As mentioned above, also in the second embodiment, execution of the abnormal detection process at startup time and operation time is the same as the first embodiment above. Abnormality of the power supply system by thermal insulation damage and the like can be detected simply, without merely using this invention as a vacuum sensor or an atmospheric pressure sensor and the like; and further, the cost can be reduced as heat efficiency can be elevated by performing the temperature detection using the thin-film heaters.

Moreover, in the first embodiment and the second embodiment, the thermal insulation container encloses the entire configuration equipped with the thin-film heaters provided in each chemical reactor and each chemical reactor which includes the vaporizing section, the reforming section and the byproduct removing section, and although the configuration is formed as unit in one body, this invention is not limited to this. For example, a configuration in which the thermal insulation container is separately formed in each vaporizing section and its thin-film heater, the reforming section and its thin-film heater, and the byproduct removing section and its thin-film heater may be suitable. As for this configuration separately formed, in the abnormal detection process, it becomes a configuration which performs separate checks (examinations) of the vaporizing section, the reforming section and the byproduct removing section respectively at operation time.

Besides, in the description of each embodiment mentioned above, although the execution of the abnormal detection process at startup time and operation time is presupposed that it detects damage by thermal insulation damage of the thermal insulation container in the chemical reaction section of the power generation section have occurred and performs detection of the abnormality of the power supply system based on the temperature of the chemical reactors, the abnormal detection process is not limited to thermal insulation damage of the thermal insulation container. In short, the state of abnormality of where heat in the chemical reaction leaks to the outside occurred based on which particular section is damaged and the like.

Furthermore, in the first embodiment and second embodiment, although a thin-film heater performs heating of each chemical reactor, this invention is not limited to this as it can be adapted for use as a catalytic combustion device in addition to a thin-film heater.

Also, the first embodiment can be adapted for use only as a catalytic combustion device by substituting the thin-film heaters.

Lastly, in the first embodiment and second embodiment, when the information section is formed in the power supply system and there are abnormalities by thermal insulation damage and the like the system reports a command that abnormalities have occurred, but this invention is not limited to this. For example, a configuration in which the information section is not formed in the power supply system, but comprises some other information means or electronic device screen display; and when there are abnormalities by thermal insulation damage and the like which transmits a command signal that abnormalities-have occurred from the power supply system to the CPU, a configuration in which the command of abnormal occurrence can be reported to some other information means or electronic device screen display from the CPU side.

While the present invention has been described with reference to the preferred embodiments, it is intended that the invention be not limited by any of the details of the description thereof.

As this invention can be embodied in several forms without departing from the spirit of the essential characteristics thereof, the present embodiments are therefore illustrative and not restrictive, since the scope of the invention is defined by the appended claims rather than by the description preceding them, and all changes that fall within meets and bounds of the claims, or equivalence of such meets and bounds thereof are intended to be embraced by the claims.

## Claims

1. A power supply system for producing electric power comprising:
a power generation section (60; 80) which generates electric power, the power generation section (60; 80) including:
at least one chemical reaction section (50; 70) to which the fuel for power generation is supplied, and
a heating section (24a, 25a, 26a) which heats the at least one chemical reaction section (50;70),
a temperature detection section (28; 48) for detecting a temperature of a chemical reaction section, and
a power generation control section (22; 42) including an abnormal judgment means which judges whether or not abnormalities in the power supply system occur, at least based on the temperature of the at least one chemical reaction section detected by the temperature detection section (28; 48),
**characterized in that**
the temperature detection section (28; 48) detects the temperature of the at least one chemical reaction section (50; 70) heated by the heating section (24a, 25a, 26a),
the power generation section (60; 80) further includes a thermal insulation (29; 49) for thermally insulating the at least one chemical reaction section (50; 70) together with its heating section (24a, 25a, 26a),
the thermal insulation (29; 49) encloses the at least one chemical reaction section (50; 70) together with its heating section (24a, 25a, 26a), and
the abnormal judgment means judges based on the temperature of the at least one chemical reaction section (50; 70) detected by the temperature detection section (28; 48) whether or not a damage in the thermal insulation (29; 49) occurred.

2. The power supply system according to claim 1, wherein the power generation control section (22) further comprises a temperature change detection means which detects the temporal response of the temperature of the chemical reaction section (50; 70) based on detection of the temperature of the chemical reaction section (50; 70) by the temperature detection section (28; 48).

3. The power supply system according to claim 2, wherein the power generation control section (22) comprises a temperature change discrimination means which determines whether or not the temperature change detected by the temperature change detection means is the proper variation quantity.

4. The power supply system according to claim 3, wherein the abnormal judgment means judges abnormalities in the power supply system are occurring when the quantity of temperature change is determined as not the proper variation quantity by the temperature change discrimination means.

5. The power supply system according to claim 3, wherein the proper variation quantity in the temperature change discrimination means is the quantity of temperature change according to the heating state of the chemical reaction section (50; 70) by the heating sections (24a, 25a, 26a; 44a, 45a, 46a) in the chemical reaction section (50; 70).

6. The power supply system according to claim 3, wherein the proper variation quantity in the temperature discrimination means is the quantity of the temperature change according to the heating state of the chemical reaction section (50; 70) by the heating sections (24a, 25a, 26a; 44a, 45a, 46a) in the chemical reaction section (50; 70) and the supply state of the fuel for power generation in the chemical reaction section (50; 70).

7. The power supply system according to claim 1, wherein the thermal insulation (29; 49) is a thermal insulation container (29; 49).

8. The power supply system according to claim 7, wherein a space is formed in between the inner wall surface of the thermal insulation container (29; 49) and at least the heating sections (24a, 25a, 26a; 44a, 45a, 46a);
within the space is a substantially vacuum state or is any state of the gas enclosed whose heat conductivity is lower than the structure components of the thermal insulation container (29; 49).

9. The power supply system according to claim 1, wherein the power generation section (60; 80) comprises a fuel cell (27) which generates the electric power by electrochemical reaction using a specified fuel element including hydrogen fuel for power generation.

10. The power supply system according to claim 9, wherein the chemical reaction section (50; 70) comprises at least a plurality of chemical reactors which includes a fuel vaporizing section (24; 44) which vaporizes the fuel for power generation; and
a fuel reforming section (25; 45) which produces the specified fuel element from the vaporized fuel for power generation.

11. The power supply system according to claim 10, wherein the chemical reaction section (50; 70) further comprises a byproduct removing section (26; 46) which removes the byproduct generated by the catalytic reaction in the fuel reforming section (25; 45).

12. The power supply system according to claim 10, wherein the thermal insulation (29; 49) is a thermal insulation container (29; 49).

13. The power supply system according to claim 12, wherein a space is formed in between the inner wall surface of the thermal insulation container (29; 49) and at least the heating sections;
within the space is a substantially vacuum state or is any state of the gas enclosed whose heat conductivity is lower than the structure components of the thermal insulation container (29; 49).

14. The power supply system according to claim 10, wherein the temperature detection section (28; 48) comprises a means which detects the respective temperature of a plurality of chemical reactors in the chemical reaction section (50; 70).

15. The power supply system according to claim 14, wherein the means which detects said temperature in the temperature detection section (28) has the temperature sensors (24c, 25c, 26c) provided in each of a plurality of chemical reactors (24, 25, 26) in the chemical reaction section (50).

16. The power supply system according to claim 10, wherein the heating sections (24a, 25a, 26a; 44a, 45a, 46a) comprise a means which heats a plurality of chemical reactors (24, 25, 26; 44, 45, 46) in the chemical reaction section (50; 70).

17. The power supply system according to claim 16, wherein the heating sections (24a, 25a, 26a; 44a, 45a, 46a) comprises the heaters (24a, 25a, 26a; 44a, 45a, 46a) provided in each of a plurality of chemical reactors (24, 25, 26; 44, 45, 46) in the chemical reaction section (50; 70); and the temperature detection section (48) uses the heaters (44a, 45a, 46a) and detects temperature based on the variation according to the temperature of the electric resistance value of these heaters (44a, 45a, 46a).

18. The power supply system according to claim 1, wherein the chemical reaction section (50; 70) comprises:
at least a plurality of substrates (251, 252) joined to each other; and
at least one passage (255) provided in at least one surface in a plurality of substrates (251, 252) to which the fuel for power generation is supplied; and
the heating sections (24a, 25a, 26a; 44a, 45a, 46a) provided in at least one surface of at least one substrate in a plurality of substrates (251, 252) and comprise a means which heats the passage (255).

19. The power supply system according to claim 18, wherein a reaction catalyst layer (256) is formed in at least a portion of the passage (255).

20. The power supply system according to claim 18, wherein the heating sections comprise the heaters (24a, 25a, 26a; 44a, 45a, 46a) provided in at least one surface of the substrate (251, 252).

21. The power supply system according to claim 20, wherein the heaters have a shape corresponding to the flat surface shape of the passage (255).

22. The power supply system according to claim 1, wherein the power generation control section (22; 42) comprises a timer (34) which times the heating elapsed time from the heating startup time of the chemical reaction section (50; 70) by the heating sections (24a, 25a, 26a; 44a, 45a, 46a).

23. The power supply system according to claim 22, wherein the power generation control section (22; 42) comprises a means which detects the temperature of the chemical reaction section (50; 70) at startup time when the heating elapsed time of the timer (34) becomes the predetermined regulated startup time by the temperature detection section (28; 48).

24. The power supply system according to claim 23, wherein the power generation control section (22; 42) comprises a temperature change discrimination means which discriminates the relative difference by comparing the temperature at startup time with the predetermined regulated startup temperature.

25. The power supply system according to claim 24, wherein the abnormal judgment means judges abnormalities in the power supply system are occurring when the temperature at startup time is discriminated as lower than the regulated startup temperature by the temperature change discrimination means.

26. The power supply system according to claim 22, wherein the power generation control section (22; 42) comprises a power supply measurement means which measures the power supply supplied to the heating sections (24a, 25a, 26a; 44a, 45a, 46a).

27. The power supply system according to claim 26, wherein the power generation control section (22; 42) comprises a means which measures the power supply quantity supplied to the heating sections (24a, 25a, 26a; 44a, 45a, 46a) as the power supply quantity at startup time when the heating elapsed time according to the timer (34) becomes the predetermined regulated startup time by the power supply measurement means.

28. The power supply system according to claim 27, wherein the power generation control section (22; 42) comprises:
a temperature change discrimination means which discriminates relative difference by comparing the temperature at startup time with the predetermined regulated startup temperature; and
a power supply quantity discrimination means which discriminates relative difference by comparing the power supply quantity at startup time with the reference power supply quantity supplied to the heating sections (24a, 25a, 26a; 44a, 45a, 46a).

29. The power supply system according to claim 28, wherein:
the abnormal judgment means judges abnormalities are occurring in the power supply system when the temperature is discriminated at startup time as lower than the regulated startup temperature by the temperature change discrimination means, and
the power supply quantity at startup time is discriminated as equal to or greater than the reference power supply quantity by the power supply quantity discrimination means.

30. The power supply system according to claim 1, wherein the power generation control section (22; 42) comprises a means which detects the temporal response of the temperature of the chemical reaction section (50; 70) as a temperature change at operation time, based on detection of the temperature of the chemical reaction section (50; 70) by the temperature detection section (28; 48) at operation time of the power generation section (60; 80).

31. The power supply system according to claim 30, wherein the power generation control section (22; 42) comprises a temperature change discrimination means which discriminates whether or not the temperature change tolerance level at that operation time deviated by comparing the temperature change at operation time with the temperature change tolerance level at predetermined operation time.

32. The power supply system according to claim 31, wherein the abnormal judgment means judges whether or not abnormalities in the power supply system are occurring based on the discrimination result of whether or not the temperature change at that operation time deviated from the temperature change tolerance level at operation time by the temperature change discrimination means.

33. The power supply system according to claim 31, wherein the power generation control section (22; 42) comprises:
a fuel supply quantity detection means (21b) which detects the fuel supply quantity for the power generation supplied to the power generation section (60; 80); and
a power supply measurement means which measures the power supply supplied to he heating sections (24a, 25a, 26a; 44a, 45a, 46a).

34. The power supply system according to claim 33, wherein the power generation control section (22; 42) comprises:
a fuel supply quantity discrimination means which discriminates whether or not the fuel supply tolerance level deviated by comparing the supplied fuel quantity for power generation with the predetermined fuel supply quantity tolerance level detected by the fuel supply quantity detection means (21b); and
a power supply discrimination means which discriminates whether or not the power supply tolerance level at that operation time deviated by comparing the power supply measured by the power supply measurement means with the power supply tolerance level at predetermined operation time.

35. The power supply system according to claim 34, wherein the abnormal judgment means judges abnormalities in the power supply system are occurring when the power supply is discriminated as within the power supply tolerance level at operation time by the power supply discrimination means; the fuel supply for the power generation is discriminated as within the fuel supply quantity tolerance level by the fuel supply quantity discrimination means; and the temperature change at operation time is discriminated as deviated from the temperature change tolerance level in the temperature decline direction at operation time by the temperature change discrimination means.

36. The power supply system according to claim 34, wherein the power generation control section (22; 42) further comprises a means which compares the power supply with the reference power supply at operation time supplied to the heating sections (24a, 25a, 26a; 44a, 45a, 46a) while detecting the temperature change at operation time; and the abnormal judgment means judges abnormalities are occurring in the power supply system when the temperature change at operation time is within the temperature change tolerance level by the temperature change discrimination means; the power supply supplied to the heating sections (24a, 25a, 26a; 44a, 45a, 46a) at the time of temperature change detection at operation time is discriminated as exceeded the reference power supply at operation time; the fuel supply for the power generation is discriminated as within the fuel supply quantity tolerance level by the fuel supply quantity discrimination means; and the power supply is discriminated as within the power supply tolerance level by the power supply discrimination means.

37. The power supply system according to claim 1, comprises an information section (33) which performs predetermined information when abnormalities in the power supply system are occurring by judgment of the abnormal judgment means.

38. The power supply system according to claim 37, wherein the information section (33) comprises at least any display means, audio output means and oscillating generations means.

39. The power supply system according to claim 1, wherein the power generation control section (22; 42) comprises a means which suspends heating of the chemical reaction section (50; 70) by the heating sections (24a, 25a, 26a; 44a, 45a, 46a) when abnormalities in the power supply system are occurring by judgment of the abnormal judgment means.

40. The power supply system according to claim 1, comprises a fuel supply section (23) for power generation which supplies the fuel for power generation to the chemical reaction section (50; 70).

41. The power supply system according to claim 40, wherein the power generation control section (22; 42) comprises a means which suspends the feed of fuel for power generation to the chemical reaction section (50; 70) by the fuel supply section (23) when abnormalities in the power supply system are occurring by judgment of the abnormal judgment means.

42. An abnormal detection method of a power supply system, wherein the power supply system comprising a power generation section which generates electric power, and the power generation section including at least one chemical reaction section to which fuel for power generation is supplied and a heating section which heats the at least one chemical reaction section, the abnormal detection method comprising the steps of:
detecting (S31) a temperature of a chemical reaction section, and judging (S32, S34, S35) whether or not abnormalities in the power supply system occur, at least based on the detected temperature of a chemical reaction section,
**characterized in that**
the power generation section further includes a thermal insulation for thermally insulating the at least one chemical reaction section together with its heating section,
the thermal insulation encloses the at least one chemical reaction section together with its heating section,
the step of detecting (S31) a temperature detects the temperature of the at least one chemical reaction section heated by the heating section, and
the step of judging (S32, S34, S35) whether or not abnormalities in the power supply system occur judges based on the detected temperature of the at least one chemical reaction section whether or not a damage in the thermal insulation occurred.

43. The abnormal detection method of a power supply system according to claim 42, includes a step which times the heating elapsed time from the heating startup time of the chemical reaction section.

44. The abnormal detection method of the power supply system according to claim 43, wherein the step which detects the temperature of the chemical reaction section includes:
a step which detects the temperature of the chemical reaction section as the temperature at startup time when the heating time elapsed time becomes the predetermined regulated startup time.

45. The abnormal detection method of the power supply system according to claim 44, wherein the step which judges whether or not abnormalities to the power supply system are occurring includes:
a step which compares the temperature at startup time with the predetermined regulated startup temperature; and
a step which judges abnormalities in the power supply system are occurring when the temperature at startup time is lower than the regulated startup temperature.

46. The abnormal detection method of the power supply system according to claim 44, wherein the abnormal detection method of the power supply system includes a step which measures the power supply quantity supplied to the heating sections for heating of the chemical reaction section.

47. The abnormal detection method of the power supply system according to claim 46, wherein the step which measures the power supply quantity includes:
a step which measures the power supply quantity supplied by the time the heating elapsed time becomes the predetermined regulated startup time as the power supply quantity at startup time.

48. The abnormal detection method of the power supply system according to claim 47, wherein the step which judges whether or not abnormalities in the power supply system are occurring includes:
a step which compares the temperature at startup time with the predetermined regulated startup temperature;
a step which compares the power supply quantity at startup time with the predetermined reference power supply quantity; and
a step which judges abnormalities in the power supply system are occurring when the power supply quantity at startup time is equal to or greater than the reference power supply quantity, and the temperature at startup time is lower than the regulated startup temperature.

49. The abnormal detection method of the power supply system according to claim 42, includes a step which detects the temporal response of the temperature of the chemical reaction section as a temperature change at operation time based on detection of the temperature of the chemical reaction section during power generation operation of the power generation section.

50. The abnormal detection method of the power supply system according to claim 49, wherein the step which judges whether or not abnormalities in the power supply system are occurring includes:
a step which compares the temperature change at operation time of the operation with the temperature change tolerance level at predetermined operation time; and
a step which judges abnormalities in the power supply system are occurring when the temperature change at operation time deviated from the temperature change tolerance level at operation time.

51. The abnormal detection method of the power supply system according to claim 49, includes a step which detects the fuel supply for the power generation supplied to the chemical reaction section.

52. The abnormal detection method of the power supply system according to claim 51, wherein the abnormal detection method of the power supply system includes a step which measures the power supply supplied to the heating sections for heating of the chemical reaction section.

53. The abnormal detection method of the power supply system according to claim 52, wherein the step which judges whether or not abnormalities in the power supply system are occurring includes:
a step which compares the temperature change at operation time with the temperature change tolerance level at operation time;
a step which discriminates whether or not the fuel supply tolerance level deviated by comparing the supplied fuel quantity for power generation with the predetermined fuel supply quantity tolerance level;
a step which discriminates whether or not the power supply tolerance level at that operation time deviated by comparing the power supply with the power supply tolerance level at predetermined operation time; and
a step which judges abnormalities in the power supply system are occurring when the temperature change at operation time is discriminated as deviated from the temperature change tolerance level in the temperature decline direction at operation time; the fuel supply for the power generation is discriminated as within the fuel supply quantity tolerance level; and the power supply is discriminated as within the power supply tolerance level at operation time.

54. The abnormal detection method of the power supply system according to claim 52, wherein the step which judges whether or not abnormalities in the power supply system are occurring includes:
a step which discriminates whether or not the power supplied for heating of the chemical reaction section at the time of temperature change detection at operation time is the proper value, and by comparing the temperature change at operation time with the temperature change tolerance level at predetermined operation time;
a step which discriminates whether or not the fuel supply quantity tolerance level at that operation time deviated by comparing the fuel supply for the power generation with the predetermined fuel supply quantity tolerance level;
a step which discriminates whether or not the power supply tolerance level at operation time deviated by comparing the power supply with the predetermined power supply tolerance level at operation time; and
a step which judges abnormalities in the power supply system are occurring when the temperature change at operation time occurred within the temperature change tolerance level at operation time; the power supply supplied for heating of the chemical reaction section at the time of temperature change at operation time is discriminated as exceeded the proper value; the power supply is discriminated as within the power supply tolerance level at operation time; and the fuel supply quantity for power generation is discriminated as within the fuel supply quantity tolerance level.

55. The abnormal detection method of the power supply system according to claim 42, wherein the abnormal detection method of the power supply system includes a step which performs predetermined information when judged abnormalities in the power supply system are occurring.

56. The abnormal detection method of the power supply system according to claim 42, wherein the abnormal detection method of the power supply system includes a step which suspends heating of the chemical reaction section when judged abnormalities to the power supply system are occurring.

57. The abnormal detection method of the power supply system according to claim 42, wherein the abnormal detection method of the power supply system includes a step which suspends the feed of fuel for the power generation to the chemical reaction section when judged abnormalities to the power supply system are occurring.

## Patentansprüche

1. Stromversorgungssystem zum Erzeugen von elektrischem Strom, das umfasst:
einen Stromerzeugungsabschnitt (60; 80), der elektrischen Strom erzeugt, wobei der Stromerzeugungsabschnitt (60; 80) enthält:
wenigstens einen Abschnitt (50; 70) für chemische Reaktionen, dem Brennstoff für Stromerzeugung zugeführt wird, und
einen Erhitzungsabschnitt (24a, 25a, 26a), der den wenigstens einen Abschnitt (50; 70) für chemische Reaktionen erhitzt,
einen Temperaturerfassungsabschnitt (28; 48) zum Erfassen einer Temperatur eines Abschnitts für chemische Reaktionen, und
einen Stromerzeugungs-Steuerabschnitt (22; 42), der eine Abweichungs-Feststelleinrichtung enthält, die basierend wenigstens auf der durch den Temperaturerfassungsabschnitt (28; 48) erfassten Temperatur des wenigstens einen Abschnitts für chemische Reaktionen feststellt, ob Abweichungen in dem Stromversorgungssystem auftreten oder nicht,
**dadurch gekennzeichnet, dass**
der Temperaturerfassungsabschnitt (28; 48) die Temperatur des durch den Erhitzungsabschnitt (24a, 25a, 26a) erhitzten wenigstens einen Abschnitts (50; 70) für chemische Reaktionen erfasst,
der Stromerzeugungsabschnitt (60; 80) des Weiteren eine Wärmeisolierung (29; 49) enthält, mit der Wärmeisolierung des wenigstens einen Abschnitts (50; 70) für chemische Reaktionen zusammen mit seinem Erhitzungsabschnitt (24a, 25a, 26a) durchgeführt wird,
wobei die Wärmeisolierung (29; 49) den wenigstens einen Abschnitt (50; 70) für chemische Reaktionen zusammen mit seinem Erhitzungsabschnitt (24a, 25a, 26a) umschließt, und
die Abweichungs-Feststelleinrichtung auf Basis der durch den Temperaturerfassungsabschnitt (28; 48) erfassten Temperatur des wenigstens einen Abschnitts (50; 70) für chemische Reaktionen feststellt, ob ein Schaden an der Wärmeisolierung (29; 49) aufgetreten ist oder nicht.

2. Stromversorgungssystem nach Anspruch 1, wobei der Stromerzeugungs-Steuerabschnitt (22) des Weiteren eine Temperaturänderungs-Erfassungseinrichtung umfasst, die das zeitliche Ansprechen der Temperatur des Abschnitts (50; 70) für chemische Reaktionen auf Basis von Erfassung der Temperatur des Abschnitts (50; 70) für chemische Reaktionen durch Temperatur-Erfassungsabschnitt (28; 48) erfasst.

3. Stromversorgungssystem nach Anspruch 2, wobei der Stromerzeugungs-Steuerabschnitt (22) eine Temperaturänderungs-Erkennungseinrichtung umfasst, die bestimmt, ob die durch die Temperaturänderungs-Erfassungseinrichtung erfasste Temperaturänderung das richtige Änderungsmaß ist oder nicht.

4. Stromversorgungssystem nach Anspruch 3, wobei die Abweichungs-Feststelleinrichtung feststellt, dass Abweichungen in dem Stromversorgungssystem auftreten, wenn durch die Temperaturänderungs-Erkennungseinrichtung bestimmt wird, dass das Maß der Temperaturänderung nicht das richtige Änderungsmaß ist.

5. Stromversorgungssystem nach Anspruch 3, wobei das richtige Änderungsmaß in der Temperaturänderungs-Erkennungseinrichtung das Maß der Temperaturänderung in dem Abschnitt (50; 70) für chemische Reaktionen aufgrund des Zustandes der Erhitzung des Abschnitts (50; 70) für chemische Reaktionen durch die Erhitzungsabschnitte (24a, 25a, 26a; 44a, 45a, 46a) ist.

6. Stromversorgungssystem nach Anspruch 3, wobei das richtige Änderungsmaß für die Temperatur-Erkennungseinrichtung das Maß der Temperaturänderung in dem Abschnitt (50; 70) für chemische Reaktionen aufgrund des Zustandes der Erhitzung des Abschnitts (50; 70) für chemische Reaktionen durch Erhitzungsabschnitte (24a, 25a, 26a; 4a, 45a, 46a) und des Zustandes der Zufuhr des Brennstoffs für Stromerzeugung in dem Abschnitt (50; 70) für chemische Reaktionen ist.

7. Stromversorgungssystem nach Anspruch 1, wobei die Wärmeisolierung (29; 49) ein Wärmeisolierbehälter (29; 49) ist.

8. Stromversorgungssystem nach Anspruch 7, wobei ein Raum zwischen der Innenwandfläche des Wärmeisolierbehälters (29; 49) und wenigstens den Erhitzungsabschnitten (24a, 25a, 26a; 44a, 45a, 46a) ausgebildet ist;
in dem Raum im Wesentlichen Vakuumzustand oder ein beliebiger Zustand des eingeschlossenen Gases herrscht, dessen Wärmeleitfähigkeit niedriger ist als die der Bauglieder des Wärmeisolierbehälters (29; 49).

9. Stromversorgungssystem nach Anspruch 1, wobei der Stromerzeugungsabschnitt (60; 80) eine Brennstoffzelle (27) umfasst, die den elektrischen Strom mittels elektrochemischer Reaktionen unter Verwendung eines bestimmten Brennstoffelementes erzeugt, das Wasserstoff-Brennstoff für Stromerzeugung enthält.

10. Stromversorgungssystem nach Anspruch 9, wobei der Abschnitt (50; 70) für chemische Reaktionen wenigstens eine Vielzahl chemischer Reaktoren, die einen Brennstoff-Verdampfungsabschnitt (24; 44) enthalten, der den Brennstoff für Stromerzeugung verdampft; und
einen Brennstoff-Reformierabschnitt (25; 45) umfasst, der das bestimmte Brennstoffelement aus dem verdampften Brennstoff für Stromerzeugung herstellt.

11. Stromversorgungssystem nach Anspruch 10, wobei der Abschnitt (50; 70) für chemische Reaktionen des Weiteren einen Nebenprodukt-Entfernungsabschnitt (26; 46) umfasst, der das durch die katalytische Reaktion in dem Brennstoff-Reformierabschnitt (25; 45) erzeugte Nebenprodukt entfernt.

12. Stromversorgungssystem nach Anspruch 10, wobei die Wärmeisolierung (29; 49) ein Wärmeisolierbehälter (29; 49) ist.

13. Stromversorgungssystem nach Anspruch 12, wobei ein Raum zwischen der Innenwandfläche des Wärmeisolierbehälters (29; 49) und wenigstens den Erhitzungsabschnitten (24a, 25a, 26a; 44a, 45a, 46a) ausgebildet ist;
in dem Raum im Wesentlichen Vakuumzustand oder ein beliebiger Zustand des eingeschlossenen Gases herrscht, dessen Wärmeleitfähigkeit niedriger ist als die der Bauglieder des Wärmeisolierbehälters (29; 49).

14. Stromversorgungssystem nach Anspruch 10, wobei der Temperaturerfassungsabschnitt (28; 48) eine Einrichtung umfasst, die die jeweilige Temperatur einer Vielzahl chemischer Reaktoren in dem Abschnitt (50; 70) für chemische Reaktionen erfasst.

15. Stromversorgungssystem nach Anspruch 14, wobei bei der Einrichtung in dem Temperaturerfassungsabschnitt (28), die die Temperatur erfasst, die Temperatursensoren (24c, 25c, 26c) in jedem einer Vielzahl chemischer Reaktoren (24, 25, 26) in dem Abschnitt (50) für chemische Reaktionen vorhanden sind.

16. Stromversorgungssystem nach Anspruch 10, wobei die Erhitzungsabschnitte (24a, 25a, 26a; 44a, 45a, 46a) eine Einrichtung umfassen, die eine Vielzahl chemischer Reaktoren (24, 25, 26, 44, 45, 46) in dem Abschnitt (50; 70) für chemische Reaktionen erhitzt.

17. Stromversorgungssystem nach Anspruch 16, wobei die Erhitzungsabschnitte (24a, 25a, 26a;
44a, 45a, 46a) die Erhitzungseinrichtungen (24a, 25a, 26a; 44a, 45a, 46a) umfassen, die in jedem einer Vielzahl chemischer Reaktoren (24, 25, 26; 44, 45, 46) in dem Abschnitt (50; 70) für chemische Reaktionen vorhanden sind; und
der Temperaturerfassungsabschnitt (48) die Heizeinrichtungen (44a, 45a, 46a) verwendet und Temperatur auf Basis der Änderung des Wertes des elektrischen Widerstandes dieser Heizeinrichtungen (44a, 45a, 46a) entsprechend der Temperatur erfasst.

18. Stromversorgungssystem nach Anspruch 1, wobei der Abschnitt (50; 70) für chemische Reaktionen umfasst:
wenigstens eine Vielzahl von Substraten (251, 252), die miteinander verbunden sind; und
wenigstens einen Kanal (255), der in wenigstens einer Fläche in einer Vielzahl von Substraten (251, 252) vorhanden ist und dem der Brennstoff für Stromerzeugung zugeführt wird; und
die Erhitzungsabschnitte (24a, 25a, 26a; 44a, 45a, 46a), die in wenigstens einer Fläche wenigstens eines Substrats in einer Vielzahl von Substraten (252, 252) vorhanden sind und eine Einrichtung umfassen, die den Kanal (255) erhitzt.

19. Stromversorgungssystem nach Anspruch 18, wobei eine Reaktionskatalysator-Schicht (256) in wenigstens einem Abschnitt des Kanals (255) ausgebildet ist.

20. Stromversorgungssystem nach Anspruch 18, wobei die Erhitzungsabschnitte (24a, 25a, 26a; 44a, 45a, 46a) die Heizeinrichtungen (24a, 25a, 26a; 44a, 45a, 46a) umfassen, die in wenigstens einer Fläche des Substrats (251, 252) vorhanden sind.

21. Stromversorgungssystem nach Anspruch 20, wobei die Heizeinrichtungen eine Form haben, die der planen Oberflächenform des Kanals (255) entspricht.

22. Stromversorgungssystem nach Anspruch 1, wobei der Stromerzeugungs-Steuerabschnitt (22; 42) ein Zeitglied (34) umfasst, das die verstrichene Erhitzungszeit seit dem Zeitpunkt des Beginns der Erhitzung des Abschnitts (50; 70) für chemische Reaktionen durch die Erhitzungsabschnitte (24a, 25a, 26a; 44a, 45a, 46a) misst.

23. Stromversorgungssystem nach Anspruch 22, wobei der Stromerzeugungs-Steuerabschnitt (22; 42) eine Einrichtung umfasst, die die Temperatur des Abschnitts (50; 70) für chemische Reaktionen zum Anfangszeitpunkt, zu dem die verstrichene Erhitzungszeit des Zeitgliedes (34) der vorgegebene eingestellte Anfangszeitpunkt wird, mit dem Temperaturerfassungsabschnitt (28; 48) erfasst.

24. Stromversorgungssystem nach Anspruch 23, wobei der Stromerzeugungs-Steuerabschnitt (22; 42) eine Temperaturänderungs-Erkennungseinrichtung umfasst, die die relative Differenz erkennt, indem sie die Temperatur zum Anfangszeitpunkt mit der vorgegebenen eingestellten Anfangs-Temperatur vergleicht.

25. Stromversorgungssystem nach Anspruch 24, wobei die Abweichungs-Feststelleinrichtung feststellt, dass Abweichungen in dem Stromversorgungssystem auftreten, wenn die Temperatur zum Anfangszeitpunkt durch die Temperaturänderungs-Erkennungseinrichtung als niedriger erkannt wird als die eingestellte Anfangs-Temperatur.

26. Stromversorgungssystem nach Anspruch 22, wobei der Stromerzeugungs-Steuerabschnitt (22; 42) eine Stromzufuhr-Messeinrichtung umfasst, die den den Erhitzungsabschnitten (24a, 25a, 26a; 44a, 45a, 46a) zugeführten Strom misst.

27. Stromversorgungssystem nach Anspruch 26, wobei der Stromerzeugungs-Steuerabschnitt (22; 42) eine Einrichtung umfasst, die die den Erhitzungsabschnitten (24a, 25a, 26a; 44a, 45a, 46a) zugeführte Stromzuführmenge mit der Stromzufuhr-Messeinrichtung als die Stromzufuhrmenge zum Anfangszeitpunkt misst, zu dem die verstrichene Erhitzungszeit dem Zeitglied (34) zufolge die vorgegebene eingestellte Anfangszeit wird.

28. Stromversorgungssystem nach Anspruch 27, wobei der Stromerzeugungs-Steuerabschnitt (22; 42) umfasst:
eine Temperaturänderungs-Erkennungseinrichtung, die relative Differenz erkennt, indem sie die Temperatur zum Anfangszeitpunkt mit der vorgegebenen eingestellten Anfangs-Temperatur vergleicht; und
eine Stromzuführmengen-Erkennungseinrichtung, die relative Differenz erkennt, indem sie die Stromzuführmenge zum Anfangszeitpunkt mit der Bezugs-Stromzuführmenge vergleicht, die den Erhitzungsabschnitten (24a, 25a, 26a; 44a, 45a, 46a) zugeführt wird.

29. Stromversorgungssystem nach Anspruch 28, wobei:
die Einrichtung zum Feststellen von Abweichungen feststellt, dass Abweichungen in dem Stromversorgungssystem auftreten, wenn die Temperatur durch die Temperaturänderungs-Erkennungseinrichtung zum Anfangszeitpunkt als niedriger als die eingestellte Anfangs-Temperatur erkannt wird, und die Stromzuführmenge zum Anfangszeitpunkt durch die Stromzuführmengen-Erkennungseinrichtung als genauso groß wie die Bezugs-Stromzuführmenge oder größer als sie erkannt wird.

30. Stromversorgungssystem nach Anspruch 1, wobei der Stromerzeugungs-Steuerabschnitt (22) eine Einrichtung umfasst, die das zeitliche Ansprechen der Temperatur des Abschnitts (50; 70) für chemische Reaktionen auf Basis von Erfassung der Temperatur des Abschnitts (50; 70) für chemische Reaktionen mit dem Temperaturerfassungsabschnitt (28; 48) bei Betriebszeit des Stromerzeugungsabschnitt (60; 80) als eine Temperaturänderung bei Betriebszeit erfasst.

31. Stromversorgungssystem nach Anspruch 30, wobei der Stromerzeugungs-Steuerabschnitt (22; 42) eine Temperaturänderungs-Erkennungseinrichtung umfasst, die erkennt, ob der Temperaturänderungs-Toleranzpegel zu der Betriebszeit abgewichen ist oder nicht, indem sie die Temperaturänderung bei Betriebszeit mit dem Temperaturänderungs-Toleranzpegel zu vorgegebener Betriebszeit vergleicht.

32. Stromversorgungssystem nach Anspruch 31, wobei die Abweichungs-Feststelleinrichtung auf Basis des Erkennungsergebnisses der Temperaturänderungs-Erkennungseinrichtung dahingehend, ob die Temperaturänderung zu der Betriebszeit von dem Temperaturänderungs-Toleranzpegel bei Betriebszeit abgewichen ist oder nicht, feststellt, ob Abweichungen in dem Stromversorgungssystem auftreten oder nicht.

33. Stromversorgungssystem nach Anspruch 31, wobei der Stromerzeugungs-Steuerabschnitt (22; 42) umfasst:
eine Brennstoffzuführmengen-Erfassungseinrichtung (21 b), die die dem Stromerzeugungsabschnitt (60; 80) zugeführte Brennstoffzuführmenge für die Stromerzeugung erfasst; und
eine Stromzufuhr-Messeinrichtung, die die Stromzufuhr zu den Erhitzungsabschnitten (24a, 25a, 26a; 44a, 45a, 46a) misst.

34. Stromversorgungssystem nach Anspruch 33, wobei der Stromerzeugungs-Steuerabschnitt (22; 42) umfasst:
eine Brennstoffzuführmengen-Erkennungseinrichtung, die erkennt, ob der Brennstoffzufuhr-Toleranzpegel abgewichen ist, indem sie durch die Brennstoffzuführmengen-Erfassungseinrichtung (21 b) erfasst die zugeführte Brennstoffmenge für Stromerzeugung mit dem vorgegebenen Brennstoffzuführmengen-Toleranzpegel vergleicht; und
eine Stromzufuhr-Erkennungseinrichtung, die erkennt, ob der Stromzufuhr-Toleranzpegel zu der Betriebszeit abgewichen ist oder nicht, indem sie die durch die Stromzufuhr-Messeinrichtung gemessene Stromzufuhr mit dem Stromzufuhr-Toleranzpegel zu vorgegebener Betriebszeit vergleicht.

35. Stromversorgungssystem nach Anspruch 34, wobei die Abweichungs-Feststelleinrichtung feststellt, dass Abweichungen in dem Stromversorgungssystem auftreten, wenn die Stromzufuhr durch die Stromzufuhr-Erkennungseinrichtung als innerhalb des Stromzufuhr-Toleranzpegels bei Betriebszeit befindlich erkannt wird, die Brennstoffzufuhr für die Stromerzeugung durch die Brennstoffzuführmengen-Erkennungseinrichtung als innerhalb des Brennstoffzuführmengen-Toleranzpegels befindlich erkannt wird, und die Temperaturänderung bei Betriebszeit durch die Temperaturänderungs-Erkennungseinrichtung als von dem Temperaturänderungs-Toleranzpegel in der Temperaturabfall-Richtung bei Betriebszeit abweichend erkannt wird.

36. Stromversorgungssystem nach Anspruch 34, wobei der Stromerzeugungs-Steuerabschnitt (22; 42) des Weiteren eine Einrichtung umfasst, die die Stromzufuhr mit der Bezugs-Stromzufuhr bei Betriebszeit vergleicht, die den Erhitzungsabschnitten (24a, 25a, 26a; 44a, 45a, 46a) zugeführt wird, während die Temperaturänderung bei Betriebszeit erfasst wird; und
die Abweichungs-Feststelleinrichtung feststellt, dass Abweichungen in dem Stromversorgungssystem auftreten, wenn die Temperaturänderung bei Betriebszeit der Temperaturänderungs-Erkennungseinrichtung zufolge innerhalb des Temperaturänderungs-Toleranzpegels liegt, die Stromzufuhr zu dem Erhitzungsabschnitten (24a, 25a, 26a; 44a, 45a, 46a) zum Zeitpunkt von Temperaturänderungs-Erfassung bei Betriebszeit als die Bezugs-Stromzufuhr bei Betriebszeit übersteigend erkannt wird, die Brennstoffzufuhr für die Stromerzeugung durch die Brennstoffzuführmengen-Erkennungseinrichtung als innerhalb des Brennstoffzuführmengen-Toleranzpegels befindlich erkannt wird, und die Stromzufuhr durch die Stromzufuhr-Erkennungseinrichtung als innerhalb des Stromzufuhr-Toleranzpegels befindlich erkannt wird.

37. Stromversorgungssystem nach Anspruch 1, das einen Informationsabschnitt (33) umfasst, der vorgegebene Informationen gibt, wenn Feststellung der Abweichungs-Feststelleinrichtung zufolge festgestellt wird, dass Abweichungen in dem Stromversorgungssystem auftreten.

38. Stromversorgungssystem nach Anspruch 37, wobei der Informationsabschnitt (33) wenigstens eine Anzeigeeinrichtung, eine Tonausgabeeinrichtung und eine Schwingungserzeugungseinrichtung umfasst.

39. Stromversorgungssystem nach Anspruch 1, wobei der Stromerzeugungs-Steuerabschnitt (22; 42) eine Einrichtung umfasst, die Erhitzung des Abschnitts (50; 70) für chemische Reaktionen durch die Erhitzungsabschnitte (24a, 25a, 26a; 44a, 45a, 46a) aussetzt, wenn Feststellung der Abweichungs-Feststelleinrichtung zufolge festgestellt wird, dass Abweichungen in dem Stromversorgungssystem auftreten.

40. Stromversorgungssystem nach Anspruch 1, das einen Brennstoffzuführabschnitt (23) für Stromerzeugung umfasst, der dem Abschnitt (50; 70) für chemische Reaktionen den Brennstoff für Stromerzeugung zuführt.

41. Stromversorgungssystem nach Anspruch 40, wobei der Stromerzeugungs-Steuerabschnitt (22; 42) eine Einrichtung umfasst, die die Zuleitung von Brennstoff für Stromerzeugung zu dem Abschnitt (50; 70) für chemische Reaktionen durch den Brennstoffzuführabschnitt (23) aussetzt, wenn gemäß der Feststellung durch den Abweichungs-Feststellabschnitt festgestellt wird, dass Abweichungen in dem Stromversorgungssystem auftreten.

42. Verfahren zum Erfassen von Abweichungen eines Stromversorgungssystems, wobei das Stromversorgungssystem einen Stromerzeugungsabschnitt umfasst, der elektrischen Strom erzeugt, und der Stromerzeugungsabschnitt wenigstens einen Abschnitt für chemische Reaktionen, dem Brennstoff für Stromerzeugung zugeführt wird, sowie einen Erhitzungsabschnitt enthält, der den wenigstens einen Abschnitt für chemische Reaktionen erhitzt, wobei das Verfahren zum Erfassen von Abweichungen die folgenden Schritte umfasst:
Erfassen (S31) einer Temperatur eines Abschnitt für chemische Reaktionen, und Feststellen (S32, S34, S36), ob Abweichungen in dem Stromversorgungssystem auftreten oder
nicht, wenigstens basierend auf der erfassten Temperatur eines Abschnitts für chemische Reaktionen,
**dadurch gekennzeichnet, dass**
der Stromerzeugungsabschnitt (60; 80) des Weiteren eine Wärmeisolierung (29; 49) enthält, mit der Wärmeisolierung des wenigstens einen Abschnitts (50; 70) für chemische Reaktionen zusammen mit seinem Erhitzungsabschnitt (24a, 25a, 26a) durchgeführt wird,
wobei die Wärmeisolierung (29; 49) den wenigstens einen Abschnitt (50; 70) für chemische Reaktionen zusammen mit seinem Erhitzungsabschnitt (24a, 25a, 26a) umschließt,
mit dem Schritt des Erfassens (S31) einer Temperatur die Temperatur des wenigstens einen durch den Erhitzungsabschnitt erhitzten Abschnitts für chemische Reaktionen erfasst wird, und
mit dem Schritt (S32, S34, S36), mit dem festgestellt wird, ob Abweichungen in dem Stromversorgungssystem auftreten oder nicht, auf Basis der erfassten Temperatur des wenigstens einen Abschnitts für chemische Reaktionen festgestellt wird, ob ein Schaden an der Wärmeisolierung aufgetreten ist oder nicht.

43. Verfahren zum Erfassen von Abweichungen eines Stromversorgungssystems nach Anspruch 42, das einen Schritt einschließt, in dem die verstrichene Erhitzungszeit seit dem Anfangszeitpunkt der Erhitzung des Abschnitts für chemische Reaktionen gemessen wird.

44. Verfahren zum Erfassen von Abweichungen des Stromversorgungssystems nach Anspruch 43, wobei der Schritt, in dem die Temperatur des Abschnitts für chemische Reaktionen erfasst wird, einschließt:
einen Schritt, in dem die Temperatur des Abschnitts für chemische Reaktionen als die Temperatur zum Anfangs-Zeitpunkt erfasst wird, wenn die verstrichene Erhitzungszeit die vorgegebene eingestellte Anfangs-Zeitpunkt wird.

45. Verfahren zum Erfassen von Abweichungen des Stromversorgungssystems nach Anspruch 44, wobei der Schritt, in dem erfasst wird, ob Abweichungen bei dem Stromversorgungssystem auftreten oder nicht, einschließt:
einen Schritt, in dem die Temperatur zum Anfangs-Zeitpunkt mit der vorgegebenen eingestellten Anfangs-Temperatur verglichen wird; und
einen Schritt, in dem festgestellt wird, dass Abweichungen in dem Stromversorgungssystem auftreten, wenn die Temperatur zum Anfangs-Zeitpunkt niedriger ist als die eingestellte Anfangs-Temperatur.

46. Verfahren zum Erfassen von Abweichungen des Stromversorgungssystems nach Anspruch 44, wobei das Verfahren zum Erfassen von Abweichungen des Stromversorgungssystems einen Schritt einschließt, in dem die den Erhitzungsabschnitten zum Erhitzen des Abschnitts für chemische Reaktionen zugeführte Stromzuführmenge gemessen wird.

47. Verfahren zum Erfassen von Abweichungen des Stromversorgungssystems nach Anspruch 46, wobei der Schritt, in dem die Stromzuführmenge gemessen wird, einschließt:
einen Schritt, in dem die Stromzuführmenge, die zu dem Zeitpunkt zugeführt wird, zu dem die verstrichene Erhitzungszeit der vorgegebene eingestellte Anfangs-Zeitpunkt wird, als die Stromzuführmenge zum Anfangs-Zeitpunkt gemessen wird.

48. Verfahren zum Erfassen von Abweichungen des Stromversorgungssystems nach Anspruch 47, wobei der Schritt, in dem festgestellt wird, ob Abweichungen in dem Stromversorgungssystem auftreten oder nicht, einschließt:
einen Schritt, in dem die Temperatur zum Anfangs-Zeitpunkt mit der vorgegebenen eingestellten Anfangs-Temperatur verglichen wird;
einen Schritt, in dem Stromzuführmenge zum Anfangs-Zeitpunkt mit der vorgegebenen Bezugs-Stromzuführmenge verglichen wird; und
einen Schritt, in dem festgestellt wird, dass Abweichungen in dem Stromversorgungssystem auftreten, wenn die Stromzuführmenge zum Anfangs-Zeitpunkt genauso groß ist wie oder größer als die Bezugs-Stromzuführmenge, und die Temperatur zum Anfangs-Zeitpunkt niedriger ist als die eingestellte Anfangs-Temperatur.

49. Verfahren zum Erfassen von Abweichungen des Stromversorgungssystems nach Anspruch 42, wobei das Verfahren einen Schritt einschließt, in dem das zeitliche Ansprechen der Temperatur des Abschnitts für chemische Reaktionen auf Basis von Erfassung der Temperatur des Abschnitts für chemische Reaktionen bei Stromerzeugungsbetrieb des Stromerzeugungsabschnitts als eine Temperaturänderung bei Betriebszeit erfasst wird.

50. Verfahren zum Erfassen von Abweichungen des Stromversorgungssystems nach Anspruch 49, wobei der Schritt, in dem festgestellt wird, ob Abweichungen in dem Stromversorgungssystem auftreten oder nicht, einschließt:
einen Schritt, in dem die Temperaturänderung bei Betriebszeit mit dem Temperaturänderungs-Toleranzpegel bei vorgegebener Betriebszeit verglichen wird; und
einen Schritt, in dem festgestellt wird, dass Abweichungen in dem Stromversorgungssystem auftreten, wenn die Temperaturänderung bei Betriebszeit von dem Temperaturänderungs-Toleranzpegel bei Betriebszeit abgewichen ist.

51. Verfahren zum Erfassen von Abweichungen des Stromversorgungssystems nach Anspruch 49, das einen Schritt einschließt, in dem die Brennstoffzufuhr für die Stromerzeugung zu dem Abschnitt für chemische Reaktionen erfasst wird.

52. Verfahren zum Erfassen von Abweichungen des Stromversorgungssystems nach Anspruch 51, wobei das Verfahren zum Erfassen von Abweichungen des Stromversorgungssystems einen Schritt einschließt, in dem die Stromstoffzufuhr zu den Erhitzungsabschnitten zum Erhitzen des Abschnitts für chemische Reaktionen gemessen wird.

53. Verfahren zum Erfassen von Abweichungen des Stromversorgungssystems nach Anspruch 52, wobei der Schritt, in dem festgestellt wird, ob Abweichungen in dem Stromversorgungssystem auftreten oder nicht, einschließt:
einen Schritt, in dem die Temperaturänderung bei Betriebszeit mit dem Temperaturänderungs-Toleranzpegel bei Betriebszeit verglichen wird;
einen Schritt, in dem erkannt wird, ob der Brennstoffzufuhr-Toleranzpegel abgewichen ist,
indem die zugeführte Brennstoffmenge für Stromerzeugung mit dem vorgegebenen Brennstoffzuführmengen-Toleranzpegel verglichen wird;
einen Schritt, in dem erkannt wird, ob der Stromzufuhr-Toleranzpegel bei Betriebszeit abgewichen ist, indem die Stromzufuhr mit dem Stromzufuhr-Toleranzpegel bei vorgegebener Betriebszeit verglichen wird; und
einen Schritt, in dem festgestellt wird, dass Abweichungen in dem Stromversorgungssystem auftreten, wenn die Temperaturänderung bei Betriebszeit als von dem Temperaturänderungs-Toleranzpegel in der Temperaturabfallrichtung bei Betriebszeit abweichend erkannt wird, die Brennstoffzufuhr für die Stromerzeugung als innerhalb des Brennstoffzuführmengen-Toleranzpegels befindlich erkannt wird und die Stromzufuhr als innerhalb des Stromzufuhr-Toleranzpegels bei Betriebszeit befindlich erkannt wird.

54. Verfahren zum Erfassen von Abweichungen des Stromversorgungssystems nach Anspruch 52, wobei der Schritt, in dem festgestellt wird, ob Abweichungen in dem Stromversorgungssystem auftreten oder nicht, einschließt:
einen Schritt, in dem erkannt wird, ob der zum Erhitzen des Abschnitts für chemische Reaktionen zum Zeitpunkt von Temperaturänderungs-Erfassung bei Betriebszeit zugeführte Strom der richtige Wert ist, indem die Temperaturänderung bei Betriebszeit mit dem Temperaturänderungs-Toleranzpegel bei vorgegebener Betriebszeit verglichen wird;
einen Schritt, in dem erkannt wird, ob der Brennstoffzuführmengen-Toleranzpegel zu der Betriebszeit abgewichen ist oder nicht, indem die Brennstoffzufuhr für die Stromerzeugung mit dem vorgegebenen Brennstoffzuführmengen-Toleranzpegel verglichen wird;
einen Schritt, in dem erkannt wird, ob der Stromzufuhr-Toleranzpegel bei Betriebszeit abgewichen ist oder nicht, indem die Stromzufuhr mit dem vorgegebenen Stromzufuhr-Toleranzpegel bei Betriebszeit verglichen wird; und
einen Schritt, in dem festgestellt wird, dass Abweichungen in dem Stromversorgungssystem auftreten, wenn die Temperaturänderung bei Betriebszeit innerhalb des Temperaturänderungs-Toleranzpegels bei Betriebszeit aufgetreten ist, die Stromzufuhr zum Erhitzen des Abschnitts für chemische Reaktionen zum Zeitpunkt von Temperaturänderung bei Betriebszeit als den richtigen Wert überschreitend erkannt wird, die Stromzufuhr als innerhalb des Stromzufuhr-Toleranzpegels bei Betriebszeit befindlich erkannt wird, und die Brennstoffzuführmenge für Stromerzeugung als innerhalb des Brennstoffzuführmengen-Toleranzpegels befindlich erkannt wird.

55. Verfahren zum Erfassen von Abweichungen des Stromversorgungssystems nach Anspruch 42, wobei das Verfahren zum Erfassen von Abweichungen des Stromversorgungssystems einen Schritt einschließt, in dem vorgegebene Informationen gegeben werden, wenn festgestellt wird, dass Abweichungen in dem Stromversorgungssystem auftreten.

56. Verfahren zum Erfassen von Abweichungen des Stromversorgungssystems nach Anspruch 42, wobei das Verfahren zum Erfassen von Abweichungen des Stromversorgungssystems einen Schritt einschließt, in dem Erhitzen des Abschnitts für chemische Reaktionen ausgesetzt wird, wenn festgestellt wird, dass Abweichungen an dem Stromversorgungssystem auftreten.

57. Verfahren zum Erfassen von Abweichungen des Stromversorgungssystems nach Anspruch 42, wobei das Verfahren zum Erfassen von Abweichungen des Stromversorgungssystems einen Schritt einschließt, in dem das Zuleiten von Brennstoff für die Stromerzeugung zu dem Abschnitt für chemische Reaktionen ausgesetzt wird, wenn festgestellt wird, dass Abweichungen an dem Stromversorgungssystem auftreten.

## Revendications

1. Système d'alimentation en énergie pour produire de l'énergie électrique, comprenant :
une section de production d'énergie (60 ; 80) qui produit de l'énergie électrique, cette section de production d'énergie (60 ; 80) contenant :
au moins une section de réaction chimique (50 ; 70) qui est alimentée en combustible pour produire de l'énergie, et
une section de chauffage (24a, 25a, 26a) qui chauffe la ou les sections de réaction chimique (50 ; 70),
une section de détection de température (28 ; 48) pour détecter une température d'une section de réaction chimique, et
une section de commande de production d'énergie (22 ; 42) contenant des moyens d'évaluation d'anomalies qui jugent que des anomalies surviennent ou non dans le système d'alimentation en énergie, au moins sur la base de la température de la ou des sections de réaction chimique détectée par la section de détection de température (28 ; 48),
**caractérisé en ce que** la section de détection de température (28 ; 48) détecte la température de la ou des sections de réaction chimique (50 ; 70) chauffées par la section de chauffage (24a, 25a, 26a),
la section de production d'énergie (60 ; 80) contient par ailleurs une isolation thermique (29 ; 49) pour l'isolation thermique de la ou des sections de réaction chimique (50 ; 70) avec leur section de chauffage (24a, 25a, 26a),
l'isolation thermique (29 ; 49) renferme la ou les sections de réaction chimique avec leur section de chauffage (24a, 25a, 26a), et
les moyens d'évaluation d'anomalies jugent, sur la base de la température de la ou des sections de réaction chimique (50 ; 70) détectée par la section de détection de température (28 ; 48), qu'une dégradation de l'isolation thermique (29 ; 49) est survenue ou pas.

2. Système d'alimentation en énergie selon la revendication 1, étant précisé que la section de commande de production d'énergie (22) comprend par ailleurs des moyens de détection de changement de température qui détectent la réponse temporelle de la température de la section de réaction chimique (50 ; 70), sur la base de la détection de la température de la section de réaction chimique (50 ; 70) par la section de détection de température (28 ; 48).

3. Système d'alimentation en énergie selon la revendication 2, étant précisé que la section de commande de production d'énergie (22) comprend des moyens de discrimination de changement de température qui déterminent si le changement de température détecté par les moyens de détection de changement de température est ou non la quantité de variation appropriée.

4. Système d'alimentation en énergie selon la revendication 3, étant précisé que les moyens d'évaluation d'anomalies jugent que des anomalies dans le système d'alimentation en énergie surviennent quand la quantité de changement de température est déterminée comme n'étant pas la quantité de variation appropriée, par les moyens de discrimination de changement de température.

5. Système d'alimentation en énergie selon la revendication 3, étant précisé que la quantité de variation appropriée dans les moyens de discrimination de changement de température est la quantité de changement de température selon l'état de chauffage de la section de réaction chimique (50 ; 70) par les sections de chauffage (24a, 25a, 26a ; 44a, 45a, 46a) dans la section de réaction chimique (50 ; 70).

6. Système d'alimentation en énergie selon la revendication 3, étant précisé que la quantité de variation appropriée dans les moyens de discrimination de température est la quantité de changement de température selon l'état de chauffage de la section de réaction chimique (50 ; 70) par les sections de chauffage (24a, 25a, 26a ; 44a, 45a, 46a) dans la section de réaction chimique (50 ; 70) et l'état d'alimentation en combustible pour la production d'énergie dans la section de réaction chimique (50 ; 70).

7. Système d'alimentation en énergie selon la revendication 1, étant précisé que l'isolation thermique (29 ; 49) est constituée par un récipient d'isolation thermique (29 ; 49).

8. Système d'alimentation en énergie selon la revendication 7, étant précisé qu'un espace est formé entre la surface de paroi intérieure du récipient d'isolation thermique (29 ; 49) et au moins les sections de chauffage (24a, 25a, 26a ; 44a, 45a, 46a) ;
et qu'à l'intérieur de cet espace, il y a un état globalement de vide ou il y a un état quelconque du gaz enfermé dont la conductivité thermique est inférieure aux composants de structure du récipient d'isolation thermique (29 ; 49) .

9. Système d'alimentation en énergie selon la revendication 1, étant précisé que la section de production d'énergie (60 ; 80) comprend une pile à combustible (27) qui produit l'énergie électrique grâce à une réaction électrochimique utilisant un élément à combustible spécifié comprenant un combustible à base d'hydrogène pour produire de l'énergie.

10. Système d'alimentation en énergie selon la revendication 9, étant précisé que la section de réaction chimique (50 ; 70) comprend au moins plusieurs réacteurs chimiques qui comprennent une section de vaporisation de combustible (24 ; 44) qui vaporise le combustible pour produire de l'énergie ; et
une section de reformage de combustible (25 ; 45) qui produit l'élément de combustible spécifié, à partir du combustible vaporisé pour produire de l'énergie.

11. Système d'alimentation en énergie selon la revendication 10, étant précisé que la section de réaction chimique (50 ; 70) comprend par ailleurs une section d'élimination de sous-produit (26 ; 46) qui élimine le sous-produit généré par la réaction catalytique dans la section de reformage de combustible (25 ; 45).

12. Système d'alimentation en énergie selon la revendication 10, étant précisé que l'isolation thermique (29 ; 49) est constituée par un récipient d'isolation thermique (29 ; 49).

13. Système d'alimentation en énergie selon la revendication 12, étant précisé qu'un espace est formé entre la surface de paroi intérieure du récipient d'isolation thermique (29 ; 49) et au moins les sections de chauffage ;
et qu'à l'intérieur de cet espace, il y a un état globalement de vide ou il y a un état quelconque du gaz enfermé dont la conductivité thermique est inférieure aux composants de structure du récipient d'isolation thermique (29 ; 49) .

14. Système d'alimentation en énergie selon la revendication 10, étant précisé que la section de détection de température (28 ; 48) comprend des moyens qui détectent la température respective de plusieurs réacteurs chimiques dans la section de réaction chimique (50 ; 70).

15. Système d'alimentation en énergie selon la revendication 14, étant précisé que les moyens qui détectent la température dans la section de détection de température (28) ont des capteurs de température (24c, 25c, 26c) prévus dans chacun des réacteurs chimiques (24, 25, 26) dans la section de réaction chimique (50).

16. Système d'alimentation en énergie selon la revendication 10, étant précisé que les sections de chauffage (24a, 25a, 26a ; 44a, 45a, 46a) comprennent des moyens qui chauffent plusieurs réacteurs chimiques (24, 25, 26 ; 44, 45, 46) dans la section de réaction chimique (50 ; 70).

17. Système d'alimentation en énergie selon la revendication 16, étant précisé que les sections de chauffage (24a, 25a, 26a ; 44a, 45a, 46a) comprennent les dispositifs de chauffage (24a, 25a, 26a ; 44a, 45a, 46a) prévus dans chacun des réacteurs chimiques (24, 25, 26 ; 44, 45, 46) dans la section de réaction chimique (50 ; 70) ; et
la section de détection de température (48) utilise les dispositifs de chauffage (44a, 45a, 46a) et détecte la température sur la base de la variation selon la température de la valeur de résistance électrique de ces dispositifs de chauffage (44a, 45a, 46a).

18. Système d'alimentation en énergie selon la revendication 1, étant précisé que la section de réaction chimique (50 ; 70) comprend :
au moins plusieurs substrats (251, 252) reliés entre eux ; et
au moins un passage (255) prévu dans au moins une surface d'au moins un substrat (251, 252) sur lequel est amené le combustible pour produire de l'énergie ; et
les sections de chauffage (24a, 25a, 26a ; 44a, 45a, 46a) prévues dans au moins une surface d'au moins un substrat, parmi les substrats (251, 252), et comprennent des moyens qui chauffent le passage (255).

19. Système d'alimentation en énergie selon la revendication 18, étant précisé qu'une couche catalytique de réaction (256) est formée dans une partie au moins du passage (255).

20. Système d'alimentation en énergie selon la revendication 18, étant précisé que les sections de chauffage comprennent les dispositifs de chauffage (24a, 25a, 26a ; 44a, 45a, 46a) prévus dans au moins une surface du substrat (251, 252).

21. Système d'alimentation en énergie selon la revendication 20, étant précisé que les dispositifs de chauffage ont une forme qui correspond à la forme de surface plate du passage (255).

22. Système d'alimentation en énergie selon la revendication 20, étant précisé que la section de commande de production d'énergie (22 ; 42) comprend une minuterie (34) qui compte la durée de chauffage qui s'écoule à partir du démarrage du chauffage de la section de réaction chimique (50 ; 70) par les sections de chauffage (24a, 25a, 26a ; 44a, 45a, 46a).

23. Système d'alimentation en énergie selon la revendication 22, étant précisé que la section de commande de production d'énergie (22 ; 42) comprend des moyens qui détectent à l'aide de la section de détection de température (28 ; 48) la température de la section de réaction chimique (50 ; 70) au moment du démarrage, quand la durée de chauffage écoulée de la minuterie (34) devient le moment de démarrage régulé prédéterminé.

24. Système d'alimentation en énergie selon la revendication 23, étant précisé que la section de commande de production d'énergie (22 ; 42) comprend des moyens de discrimination de changement de température qui établissent la différence relative en comparant la température au moment du démarrage à la température de démarrage régulée prédéterminée.

25. Système d'alimentation en énergie selon la revendication 24, étant précisé que les moyens d'évaluation d'anomalies jugent que des anomalies dans le système d'alimentation en énergie surviennent quand la température au moment du démarrage est établie comme étant inférieure à la température de démarrage régulée, grâce aux moyens de discrimination de changement de température.

26. Système d'alimentation en énergie selon la revendication 22, étant précisé que la section de commande de production d'énergie (22 ; 42) comprend des moyens de mesure d'alimentation en énergie qui mesurent l'énergie fournie aux sections de chauffage (24a, 25a, 26a ; 44a, 45a, 46a).

27. Système d'alimentation en énergie selon la revendication 26, étant précisé que la section de commande de production d'énergie (22 ; 42) comprend des moyens qui mesurent à l'aide des moyens de mesure d'alimentation en énergie la quantité d'énergie fournie aux sections de chauffage (24a, 25a, 26a ; 44a, 45a, 46a) comme quantité d'alimentation en énergie au moment du démarrage quand la durée de chauffage écoulée selon la minuterie (34) devient le temps de démarrage régulé déterminé.

28. Système d'alimentation en énergie selon la revendication 27, étant précisé que la section de commande de production d'énergie (22 ; 42) comprend :
des moyens de discrimination de changement de température qui établissent une différence relative en comparant la température au moment du démarrage à la température de démarrage régulée prédéterminée ; et
des moyens de discrimination de quantité d'alimentation en énergie qui établissent une différence relative en comparant la quantité d'alimentation en énergie au moment du démarrage à la quantité d'énergie de référence fournie aux sections de chauffage (24a, 25a, 26a ; 44a, 45a, 46a).

29. Système d'alimentation en énergie selon la revendication 28, étant précisé que les moyens d'évaluation d'anomalies jugent que des anomalies surviennent dans le système d'alimentation en énergie quand la température est discriminée par les moyens de discrimination de changement de température au moment du démarrage comme étant inférieure à la température de démarrage régulée, et la quantité d'alimentation en énergie au moment du démarrage est discriminée par les moyens de discrimination de quantité d'alimentation en énergie comme étant égale ou supérieure à la quantité d'alimentation en énergie de référence.

30. Système d'alimentation en énergie selon la revendication 1, étant précisé que la section de commande de production d'énergie (22 ; 42) comprend des moyens qui détectent la réponse temporelle de la température de la section de réaction chimique (50 ; 70) comme changement de température au moment du fonctionnement, sur la base de la détection de la température de la section de réaction chimique (50 ; 70) par la section de détection de température (28 ; 48) au moment du fonctionnement de la section de production d'énergie (60 ; 80).

31. Système d'alimentation en énergie selon la revendication 30, étant précisé que la section de commande de production d'énergie (22 ; 42) comprend des moyens de discrimination de changement de température qui établissent que le niveau de tolérance de changement de température au moment du fonctionnement a dévié ou non, en comparant le changement de température au moment du fonctionnement au niveau de tolérance de changement de température à un moment de fonctionnement prédéterminé.

32. Système d'alimentation en énergie selon la revendication 31, étant précisé que les moyens d'évaluation d'anomalies jugent à l'aide des moyens de discrimination de changement de température que des anomalies dans le système d'alimentation en énergie surviennent ou non, sur la base du résultat de discrimination indiquant si le changement de température à ce moment de fonctionnement a dévié ou non du niveau de tolérance de changement de température au moment du fonctionnement.

33. Système d'alimentation en énergie selon la revendication 31, étant précisé que la section de commande de production d'énergie (22 ; 42) comprend :
des moyens de détection de quantité de combustible fourni (21b) qui détectent la quantité de combustible fourni, pour la production d'énergie, à la section de production d'énergie (60 ; 80) ; et
des moyens de mesure d'alimentation en énergie qui mesurent l'énergie fournie aux sections de chauffage (24a, 25a, 26a ; 44a, 45a, 46a).

34. Système d'alimentation en énergie selon la revendication 33, étant précisé que la section de commande de production d'énergie (22 ; 42) comprend :
des moyens de discrimination de quantité de combustible qui établissent si le niveau de tolérance de combustible fourni a dévié ou pas, en comparant la quantité de combustible fourni pour la production d'énergie détectée par les moyens de détection de quantité de combustible fourni (21b) au niveau de tolérance de quantité de combustible prédéterminé; et
des moyens de discrimination d'alimentation en énergie qui établissent que le niveau de tolérance d'alimentation en énergie à ce moment de fonctionnement a dévié ou non, en comparant l'alimentation en énergie mesurée par les moyens de mesure d'alimentation en énergie au niveau de tolérance d'alimentation en énergie à un moment de fonctionnement prédéterminé.

35. Système d'alimentation en énergie selon la revendication 34, étant précisé que les moyens d'évaluation d'anomalies jugent que des anomalies dans le système d'alimentation en énergie surviennent ou non quand l'alimentation en énergie est discriminée par les moyens de discrimination d'alimentation en énergie, comme étant située à l'intérieur du niveau de tolérance d'alimentation en énergie au moment du fonctionnement ; l'alimentation en combustible pour la production d'énergie est discriminée par les moyens de discrimination de quantité d'alimentation en énergie en combustible comme étant située à l'intérieur du niveau de tolérance de quantité d'alimentation en combustible ; et le changement de température au moment du fonctionnement est discriminé par les moyens de discrimination de changement de température, comme ayant dévié du niveau de tolérance de changement de température dans le sens d'une baisse de température au moment du fonctionnement.

36. Système d'alimentation en énergie selon la revendication 34, étant précisé que la section de commande de production d'énergie (22 ; 42) comprend par ailleurs des moyens qui comparent l'alimentation en énergie à l'alimentation en énergie de référence, au moment du fonctionnement, fournie aux sections de chauffage (24a, 25a, 26a ; 44a, 45a, 46a), tout en détectant le changement de température au moment du fonctionnement ; et
les moyens d'évaluation d'anomalies jugent que des anomalies surviennent dans le système d'alimentation en énergie quand le changement de température au moment du fonctionnement est situé à l'intérieur du niveau de tolérance de changement de température, à l'aide des moyens de discrimination de changement de température ; l'alimentation en énergie des sections de chauffage (24a, 25a, 26a ; 44a, 45a, 46a) au moment de la détection de changement de température au moment du fonctionnement est discriminée comme dépassant l'alimentation en énergie de référence au moment du fonctionnement ; l'alimentation en combustible pour la production d'énergie est discriminée par les moyens de discrimination de quantité d'alimentation en combustible, comme étant située à l'intérieur du niveau de tolérance de quantité d'alimentation en combustible ; et l'alimentation en énergie est discriminée par les moyens de discrimination d'alimentation en énergie, comme étant située à l'intérieur du niveau de tolérance d'alimentation en énergie.

37. Système d'alimentation en énergie selon la revendication 1, étant précisé qu'il comprend une section d'information (33) qui fournit des informations prédéterminées quand des anomalies dans le système d'alimentation en énergie surviennent selon l'estimation des moyens d'évaluation d'anomalies.

38. Système d'alimentation en énergie selon la revendication 37, étant précisé que la section d'information (33) comprend au moins des moyens d'affichage, des moyens de sortie audio et des moyens de production oscillants.

39. Système d'alimentation en énergie selon la revendication 1, étant précisé que la section de commande de production d'énergie (22 ; 42) comprend des moyens qui suspendent le chauffage de la section de réaction chimique (50 ; 70) par les sections de chauffage (24a, 25a, 26a ; 44a, 45a, 46a) quand des anomalies dans le système d'alimentation en énergie surviennent selon l'estimation des moyens d'évaluation d'anomalies.

40. Système d'alimentation en énergie selon la revendication 1, qui comprend une section d'alimentation en combustible (23) pour produire de l'énergie, qui fournit à la section de réaction chimique (50 ; 70) le combustible pour produire de l'énergie.

41. Système d'alimentation en énergie selon la revendication 40, étant précisé que la section de commande de production d'énergie (22 ; 42) comprend des moyens qui suspendent l'alimentation en combustible de la section de réaction chimique (50 ; 70) par la section d'alimentation en combustible (23) pour la production d'énergie, quand des anomalies dans le système d'alimentation en énergie surviennent selon l'estimation des moyens d'évaluation d'anomalies.

42. Procédé de détection d'anomalies pour un système d'alimentation en énergie, étant précisé que le système d'alimentation en énergie comprend une section de production d'énergie qui produit de l'énergie électrique, et que cette section de production d'énergie contient au moins une section de réaction chimique qui est alimentée en combustible pour produire de l'énergie, et une section de chauffage qui chauffe la ou les sections de réaction chimique, le procédé de détection d'anomalies comprenant les étapes qui consistent :
à détecter (S31) une température d'une section de réaction chimique, et à juger (S32, S34, S35) que des anomalies dans le système d'alimentation en énergie surviennent ou non, au moins sur la base de la température détectée d'une section de réaction chimique,
**caractérisé en ce que** la section de production d'énergie contient par ailleurs une isolation thermique pour l'isolation thermique de la ou des sections de réaction chimique avec leur section de chauffage,
l'isolation thermique renferme la ou les sections de réaction chimique avec leur section de chauffage,
l'étape qui consiste à détecter (S31) une température détecte la température de la ou des sections de réaction chimique chauffées par la section de chauffage, et
l'étape qui consiste à juger (S32, S34, S35) que des anomalies dans le système d'alimentation en énergie surviennent ou non juge, sur la base de la température détectée de la ou des sections de réaction chimique, qu'une dégradation de l'isolation thermique est survenue ou non.

43. Procédé de détection d'anomalies pour le système d'alimentation en énergie selon la revendication 42, avec une étape qui compte la durée de chauffage écoulée à partir du moment du démarrage du chauffage de la section de réaction chimique.

44. Procédé de détection d'anomalies pour le système d'alimentation en énergie selon la revendication 43, étant précisé que l'étape qui détecte la température de la section de réaction chimique comprend :
une étape qui détecte la température de la section de réaction chimique comme température à un moment de démarrage quand la durée de chauffage écoulée devient le moment de démarrage régulé prédéterminé.

45. Procédé de détection d'anomalies pour le système d'alimentation en énergie selon la revendication 44, étant précisé que l'étape qui consiste à juger que des anomalies dans le système d'alimentation en énergie surviennent ou non comprend :
une étape qui compare la température au moment du démarrage à la température de démarrage régulée prédéterminée ; et
une étape qui juge que des anomalies dans le système d'alimentation en énergie surviennent quand la température au moment du démarrage est inférieure à la température de démarrage régulée.

46. Procédé de détection d'anomalies pour le système d'alimentation en énergie selon la revendication 44, étant précisé qu'il comprend une étape qui mesure la quantité d'énergie fournie aux sections de chauffage pour chauffer la section de réaction chimique.

47. Procédé de détection d'anomalies pour le système d'alimentation en énergie selon la revendication 46, étant précisé que l'étape qui mesure la quantité d'énergie fournie comprend :
une étape qui mesure la quantité d'énergie fournie au moment òu la durée de chauffage écoulée devient la durée de démarrage régulée prédéterminée comme quantité d'alimentation en énergie au moment du démarrage.

48. Procédé de détection d'anomalies pour le système d'alimentation en énergie selon la revendication 47, étant précisé que l'étape qui juge que des anomalies dans le système d'alimentation en énergie surviennent ou non comprend :
une étape qui compare la température au moment du démarrage à la température de démarrage régulée prédéterminée ;
une étape qui compare la quantité d'alimentation en énergie au moment du démarrage, à la quantité d'alimentation en énergie de référence prédéterminée ; et
une étape qui juge que des anomalies dans le système d'alimentation en énergie surviennent quand la quantité d'alimentation en énergie au moment du démarrage est égale ou supérieure à la quantité d'alimentation en énergie de référence, et quand la température au moment du démarrage est inférieure à la température de démarrage régulée.

49. Procédé de détection d'anomalies pour le système d'alimentation en énergie selon la revendication 42, qui comprend une étape détectant la réponse temporelle de la température de la section de réaction chimique comme changement de température à un moment de fonctionnement, sur la base de la détection de la température de ladite section de réaction chimique pendant la production d'énergie de la section de production d'énergie.

50. Procédé de détection d'anomalies pour le système d'alimentation en énergie selon la revendication 49, étant précisé que l'étape qui juge que des anomalies dans le système d'alimentation en énergie surviennent ou non comprend :
une étape qui compare le changement de température, au moment du fonctionnement, au niveau de tolérance de changement de température à un moment de fonctionnement prédéterminé ; et
une étape qui juge que des anomalies dans le système d'alimentation en énergie surviennent quand le changement de température au moment du fonctionnement a dévié du niveau de tolérance de changement de température au moment du fonctionnement.

51. Procédé de détection d'anomalies pour le système d'alimentation en énergie selon la revendication 49, qui comprend une étape qui détecte l'alimentation en combustible, pour la production d'énergie, fourni à la section de réaction chimique.

52. Procédé de détection d'anomalies pour le système d'alimentation en énergie selon la revendication 51, étant précisé qu'il comprend une étape qui mesure l'alimentation en énergie fournie aux sections de chauffage pour chauffer la section de réaction chimique.

53. Procédé de détection d'anomalies pour le système d'alimentation en énergie selon la revendication 52, étant précisé que l'étape qui juge que des anomalies dans le système d'alimentation en énergie surviennent comprend :
une étape qui compare le changement de température au moment du fonctionnement, au niveau de tolérance de changement de température au moment du fonctionnement ;
une étape qui détermine que le niveau de tolérance d'alimentation en combustible a dévié ou non, en comparant la quantité de combustible fourni pour la production d'énergie au niveau de tolérance prédéterminé de quantité de combustible fourni ;
une étape qui détermine que le niveau de tolérance d'alimentation en énergie à ce moment de fonctionnement a dévié ou non, en comparant l'alimentation en énergie au
niveau de tolérance d'alimentation en énergie à un moment de fonctionnement prédéterminé ; et
une étape qui juge que des anomalies dans le système d'alimentation en énergie surviennent quand le changement de température au moment du fonctionnement est discriminé comme ayant dévié du niveau de tolérance de changement de température dans le sens d'une baisse de température au moment du fonctionnement ; l'alimentation en combustible pour la production d'énergie est discriminée comme étant située à l'intérieur du niveau de tolérance de quantité de combustible fourni ; et l'alimentation en énergie est discriminée comme étant située à l'intérieur du niveau de tolérance d'alimentation en énergie au moment du fonctionnement.

54. Procédé de détection d'anomalies pour le système d'alimentation en énergie selon la revendication 52, étant précisé que l'étape qui juge que des anomalies dans le système d'alimentation en énergie surviennent ou non comprend :
une étape qui détermine que l'énergie fournie pour chauffer la section de réaction chimique au moment de la détection de changement de température au moment du fonctionnement est ou non la valeur appropriée, en comparant le changement de température au moment du fonctionnement, au niveau de tolérance de changement de température à un moment de fonctionnement prédéterminé ;
une étape qui détermine que le niveau de tolérance de quantité de combustible fourni au moment du fonctionnement a dévié ou non, en comparant l'alimentation en combustible pour la production d'énergie au niveau de tolérance prédéterminé de quantité de combustible fourni ;
une étape qui détermine si le niveau de tolérance d'alimentation en énergie au moment du fonctionnement a dévié ou non, en comparant l'alimentation en énergie au niveau de tolérance d'alimentation en énergie prédéterminé au moment du fonctionnement ; et
une étape qui juge que des anomalies dans le système d'alimentation en énergie surviennent quand le changement de température au moment du fonctionnement est survenu à l'intérieur du niveau de tolérance de changement de température au moment du fonctionnement ; l'alimentation en énergie fournie pour chauffer la section de réaction chimique au moment du changement de température au moment du fonctionnement est discriminée comme dépassant la valeur appropriée ; l'alimentation en énergie est discriminée comme étant située à l'intérieur du niveau de tolérance d'alimentation en énergie au moment du fonctionnement ; et la quantité de combustible fourni pour la production d'énergie est discriminée comme étant située à l'intérieur du niveau de tolérance de quantité de combustible fourni.

55. Procédé de détection d'anomalies pour le système d'alimentation en énergie selon la revendication 42, étant précisé qu'il comprend une étape qui fournit des informations prédéterminées quand il est jugé que des anomalies dans le système d'alimentation en énergie surviennent.

56. Procédé de détection d'anomalies pour le système d'alimentation en énergie selon la revendication 42, étant précisé qu'il comprend une étape qui suspend le chauffage de la section de réaction chimique quand il est jugé que des anomalies dans le système d'alimentation en énergie surviennent.

57. Procédé de détection d'anomalies pour un système d'alimentation en énergie selon la revendication 42, étant précisé qu'il comprend une étape qui suspend l'alimentation en combustible, pour la production d'énergie, de la section de réaction chimique, quand il est jugé que des anomalies dans le système d'alimentation en énergie surviennent.
